(19) **Europäisches Patentamt / European Patent Office / Office européen des brevets**

(11) **EP 4 120 045 B1**

(12) **EUROPEAN PATENT SPECIFICATION**

(45) Date of publication and mention
of the grant of the patent:
**14.05.2025  Bulletin 2025/20**

(21) Application number: **21184962.5**

(22) Date of filing: **12.07.2021**

(51) International Patent Classification (IPC):
**G05D 23/19** (2006.01)      **F24F 120/10** (2018.01)
**F24F 120/20** (2018.01)     **F24F 140/50** (2018.01)

(52) Cooperative Patent Classification (CPC):
**G05D 23/1917;** F24F 11/62; F24F 2120/10;
F24F 2120/20; F24F 2140/50

(54) **HEATING, VENTILATION, AND AIR-CONDITIONING, SYSTEM, METHOD OF CONTROLLING A HEATING, VENTILATION, AND AIR-CONDITIONING SYSTEM AND METHOD OF TRAINING A COMFORT MODEL TO BE USED FOR CONTROLLING A HEATING, VENTILATION, AND AIR-CONDITIONING SYSTEM**

HEIZUNGS-, LÜFTUNGS- UND KLIMAANLAGE, SYSTEM, VERFAHREN ZUR STEUERUNG EINER HEIZUNGS-, LÜFTUNGS- UND KLIMAANLAGE UND VERFAHREN ZUM TRAINIEREN EINES KOMFORTMODELLS, DAS ZUR STEUERUNG EINER HEIZUNGS-, LÜFTUNGS- UND KLIMAANLAGE VERWENDET WERDEN SOLL

SYSTÈME DE CHAUFFAGE, DE VENTILATION ET DE CLIMATISATION, PROCÉDÉ DE COMMANDE D'UN SYSTÈME DE CHAUFFAGE, DE VENTILATION ET DE CLIMATISATION ET PROCÉDÉ D'APPRENTISSAGE D'UN MODÈLE DE CONFORT À UTILISER POUR COMMANDER UN SYSTÈME DE CHAUFFAGE, DE VENTILATION ET DE CLIMATISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2023  Bulletin 2023/03**

(73) Proprietor: **Robert Bosch GmbH**
**70442 Stuttgart (DE)**

(72) Inventors:
• **Cola, Fabrizio**
**534635 Singapur (SG)**
• **Gupta, Manish**
**328373 Singapur (SG)**
• **Tanyildiz, Baris**
**574036 Singapore (SG)**

(56) References cited:
WO-A1-2021/026369        CN-B- 110 044 011
US-A1- 2012 259 469      US-A1- 2016 306 813
US-A1- 2019 285 303      US-A1- 2021 102 724
US-B2- 9 429 923

• ANONYMOUS: "How to detect a Virtual Machine by its MAC address? | FAQ | MAC Address Vendor Lookup", 24 April 2019 (2019-04-24), XP055897647, Retrieved from the Internet <URL:https://macaddress.io/faq/how-to-detect-a-virtual-machine-by-its-mac-address> [retrieved on 20220304]
• ANONYMOUS: "How to Identify Devices on My Network", 10 June 2021 (2021-06-10), XP055897654, Retrieved from the Internet <URL:https://www.lifewire.com/identify-devices-on-network-5181091> [retrieved on 20220304]

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical field**

Various aspects of this disclosure relate to a heating, ventilation, and air-conditioning, HVAC system; a method of controlling a HVAC system; and a method of training a comfort model to be used for controlling a HVAC system.

**Background**

A heating, ventilation, and air-conditioning, HVAC, system may be employed to control an indoor environment (e.g., in a building) to provide a thermal comfort and/or a desired indoor air quality. A HVAC system may employ a user-in-the-loop approach, wherein a respective thermal comfort of users or occupants of the indoor environment is considered. Various aspects relate to a HVAC system and a method of controlling a HVAC system which employ a user-specific comfort model to predict a respective thermal comfort of the users or occupants and which are capable to control the HVAC system in accordance with the thermal comforts. The HVAC system and the method of controlling a HVAC system are further capable to consider energy requirements of the HVAC system and to control the HVAC system in accordance with the thermal comforts as well as the energy requirements. Various aspects relate to a method of training a comfort model to be used for controlling a HVAC system. The trained comfort model is capable to predict the thermal comfort of a user without requiring a real-time user feedback.

WO 2021/ 026 369 A1 describes a building control system which includes one or more controllers configured to: obtain comfort feedback provided by one or more occupants of a building in response to exposing the one or more occupants to a first set of environmental conditions of the building; generate, based on the comfort feedback, one or more thresholds defining a range of values for an environmental condition of the building within which the one or more occupants are predicted to be comfortable; and execute a predictive control process subject to one or more constraints based on the one or more thresholds to generate setpoints for building equipment, and operate the building equipment to drive the environmental condition of the building toward the setpoints. US 9 429 923 B2 describes a method of controlling a heating, ventilation and air conditioning (HVAC) system of a building by: (a) developing an initial thermal model of the building, and continuously updating the thermal model over time; (b) utilizing the thermal model to continuously develop a daily HVAC operating plan for the building; and (c) continuously examining a current HVAC operating plan and optimizing the alignment of the current HVAC operation with the current HVAC operating plan. US 2021 / 0 102 724 A1 describes a method including identifying a hierarchical position of a particular distribution channel element; identifying potential set point configuration actions associated with the particular distribution channel element, wherein each potential set point configuration action is expected to cause transition of the particular distribution channel element from a current state to a future state; determining an overall cost measure for each potential set point configuration action based at least in part on the hierarchical position of the particular distribution channel element; and generating the supply stream temperature set-point based on each overall cost measure associated with a potential set point configuration action.

**Summary**

Various embodiments relate to a method of controlling a heating, ventilation, and air-conditioning, HVAC, system, the HVAC system comprising a plurality of HVAC devices, the method including: training a plurality of comfort models to be used for controlling the heating, ventilation, and air-conditioning, HVAC, system, wherein each comfort model of the plurality of comfort models is associated with a respective user of a plurality of users, wherein the training of a respective comfort model of the plurality of comfort models comprising: a user device associated with the respective comfort model providing a plurality of user feedbacks, each user feedback of the plurality of user feedbacks describing a thermal comfort of the respective user associated with the user device, wherein each user feedback of the plurality of user feedbacks is associated with a respective point in time, wherein the plurality of user feedbacks comprises two or more cold feedbacks indicating that the user of the user device associated with the comfort model feeling cold; determining a weight matrix, the weight matrix includes, for each trained comfort model of the plurality of trained comfort models, a respective weight value for each HVAC device of the plurality of HVAC devices; determining running parameters of each HVAC device of the plurality of HVAC devices such that a total predicted thermal comfort representing all predicted thermal comforts, which are generated by the plurality of comfort models responsive to inputting the running parameters of each of the plurality of HVAC devices into each comfort model, is increased, considering the determined weight value of each HVAC device of the plurality of HVAC devices associated with each comfort model of the plurality of comfort models; and controlling the HVAC system in accordance with the determined running parameters.

According to various embodiments, training of the respective comfort model of the plurality of comfort models may further include, at each point in time associated with the plurality of user feedbacks, each HVAC device of the plurality of HVAC devices associated with the HVAC system detecting running parameters of the respective HVAC device; for each user feedback of the plurality of user feedbacks: inputting the running parameters, which are detected at the point in time associated with the respective user feedback, of each of the plurality of HVAC devices into the respective comfort model to generate a predicted thermal comfort, determining a loss value by comparing the predicted thermal comfort with the thermal comfort described by the respective user feedback, and training the respective comfort model to be used for controlling the HVAC system to reduce the loss value.

According to various embodiments, the running parameters may include one or more of an environmental temperature (e.g., an air temperature), a fan speed, a valve opening, and/or a time of day.

According to various embodiments, at each point in time associated with the plurality of user feedbacks, each HVAC device of the plurality of HVAC devices associated with the HVAC system may detect running parameters of the respective HVAC device; for each user feedback of the plurality of user feedbacks, the running parameters, which are detected at the point in time associated with the respective user feedback, of each of the plurality of HVAC devices may be inputted into the comfort model to generate a predicted thermal comfort; and the plurality of user feedbacks may include two or more cold feedbacks indicating that the user of the user device associated with the comfort model feeling cold and the method may further include: for each point in time associated with the two or more cold feedbacks, determining a respective cooling load of each HVAC device of the plurality of HVAC devices using the detected running parameters of the respective HVAC device; for each HVAC device of the plurality of HVAC devices, determining a cooling load sum by summing up all cooling loads determined for the points in time associated with the two or more cold feedbacks; and for each HVAC device of the plurality of HVAC devices, determining a respective weight value as a fraction of the determined cooling load sum from a total cooling load, the total cooling load being a sum of all determined cooling load sums of the plurality of HVAC devices.

According to various embodiments, determining respective running parameters of each HVAC device of the plurality of HVAC devices such that a total predicted thermal comfort representing all predicted thermal comforts, which are generated by the comfort models responsive to inputting the running parameters of each of the plurality of HVAC devices into each comfort model, is increased may include: determining respective running parameters of each HVAC device of the plurality of HVAC devices such that a total predicted thermal comfort representing all predicted thermal comforts, which are generated by the comfort models responsive to inputting the running parameters of each of the plurality of HVAC devices into each comfort model, is increased considering: a predefined comfort constraint representing a minimum predicted thermal comfort, a predefined load constraint representing a maximum load of the HVAC system predicted for the running parameters, and/or predefined total comfort constraint representing a minimum total predicted thermal comfort.

According to various embodiments, the method may further include detecting a plurality of Media-Access-Control, MAC, addresses associated with a plurality of devices present in a local short range network associated with the HVAC system; for each detected MAC address, detecting vendor information representing a vendor of the device associated with the MAC address and classifying the MAC address either into a first class in the case that the vendor of the device is associated with a device capable to create a virtualization of a network card or into a second class otherwise; filtering the MAC addresses which are classified into the first class such that only one MAC address is selected for each device; determining a total number of occupants as a total number of MAC address, the total number of MAC addresses comprising the MAC addresses which are classified into the second class and the MAC addresses selected from the first class; adapting the determined running parameters using the determined total number of occupants; and wherein controlling the HVAC system in accordance with the determined running parameters comprises controlling the HVAC system in accordance with the adapted running parameters.

According to various embodiments, each trained comfort model may be associated with a respective feedback identification of a plurality of feedback identifications and the method may further include: providing a plurality of user feedbacks, wherein each user feedback of the plurality of user feedbacks is associated with a feedback identification of the plurality of feedback identifications and describes a thermal comfort of a user associated with the feedback identification, wherein each user feedback of the plurality of user feedbacks is provided at a respective point in time; at each point in time associated with a user feedback of the plurality of user feedbacks, detecting a plurality of Media-Access-Control, MAC, addresses, wherein each MAC address of the plurality of MAC addresses is associated with a device of a plurality of devices present in a local short range network associated with the HVAC system; and correlating each MAC address of the plurality of MAC addresses with a feedback identification of the plurality of feedback identifications using the points in time associated with the plurality of user feedbacks by employing a correlation metric.

According to various embodiments, determining respective running parameters of each HVAC device of the plurality of HVAC devices such that a total predicted thermal comfort representing all predicted thermal comforts, which are generated by the comfort models responsive to inputting the running parameters of each of the plurality of HVAC devices into each comfort model, is increased may include: for each trained comfort model, determining a region in which the device having the MAC address which is correlated with the feedback identification of the respective trained comfort model is located; for each trained comfort model, determining one or more HVAC devices of the plurality of HVAC devices which are associated with the determined region; and determining respective running parameters of each HVAC device of the plurality of HVAC devices such that a total predicted thermal comfort representing all predicted thermal comforts, which are generated by the trained comfort models responsive to inputting the running parameters of each HVAC device of the determined one or more HVAC devices into the respective trained comfort model, is increased.

According to various embodiments, the correlation metric may include a leverage metric, a co-occurrence metric, a lift metric, a confidence metric, and/or a conviction metric.

According to various embodiments, correlating each MAC address of the plurality of MAC addresses with a feedback identification of the plurality of feedback identifications using the points in time associated with the plurality of user feedbacks by employing a correlation metric may include: for each MAC address of the plurality of MAC addresses, detecting vendor information representing a vendor of the device associated with the respective MAC address and classifying the MAC address either into a first class in the case that the vendor of the device is associated with a device capable to create a virtualization of a network card or into a second class otherwise; filtering the MAC addresses which are classified into the first class such that at each point in time only one MAC address is selected for each device of the plurality of devices; and correlating each MAC address classified into the second class and each MAC address selected from the first class with a feedback identification of the plurality of feedback identifications using the points in time associated with the plurality of user feedbacks by employing the correlation metric.

According to various embodiments, a user device of the plurality of user devices is a button device having feedback buttons, a personal computer, a laptop, a tablet, a smartwatch, or a smartphone.

Various embodiments relate to a heating, ventilation, and air-conditioning, HVAC, system, the HVAC system including: a plurality of user devices, wherein each of the plurality of user devices is configured to provide user feedbacks; a plurality of HVAC devices, wherein each of the plurality of HVAC devices is associated with respective running parameters; and a control device configured to control the plurality of HVAC devices, to receive user feedbacks from the plurality of user devices, and to carry out the method of any of one of the above described embodiments.

Various embodiments relate to a method of controlling a heating, ventilation, and air-conditioning, HVAC, system, the method including: providing a plurality of user feedbacks, wherein each user feedback of the plurality of user feedbacks is associated with a feedback identification of a plurality of feedback identifications and describes a thermal comfort of a user associated with the feedback identification, wherein each user feedback of the plurality of user feedbacks is provided at a respective point in time; at each point in time associated with a user feedback of the plurality of user feedbacks, detecting a plurality of Media-Access-Control, MAC, addresses, wherein each MAC address of the plurality of MAC addresses is associated with a user device of a plurality of user devices present in a local short range network associated with the HVAC system; and correlating each MAC address of the plurality of MAC addresses with a feedback identification of the plurality of feedback identifications using the points in time associated with the plurality of user feedbacks by employing a correlation metric. According to various embodiments, the correlation metric comprises a co-occurrence metric, a lift metric, a confidence metric, and/or a conviction metric. According to various embodiments, correlating each MAC address of the plurality of MAC addresses with a feedback identification of the plurality of feedback identifications using the points in time associated with the plurality of user feedbacks by employing the correlation metric may include: for each MAC address of the plurality of MAC addresses, detecting vendor information representing a vendor of the user device associated with the respective MAC address and classifying the MAC address either into a first class in the case that the vendor of the user device is associated with a device capable to create a virtualization of a network card or into a second class otherwise; filtering the MAC addresses which are classified into the first class such that at each point in time only one MAC address is selected for each user device of the plurality of user devices; and correlating each MAC address classified into the second class and each MAC address selected from the first class with a feedback identification of the plurality of feedback identifications using the points in time associated with the plurality of user feedbacks by employing the correlation metric.

**Brief description of the drawings**

The invention will be better understood with reference to the detailed description when considered in conjunction with the non-limiting examples and the accompanying drawings, in which:

- FIG. 1 shows an exemplary HVAC system according to various embodiments;
- FIG. 2A to FIG. 2C, FIG. 5B, and FIG. 7C each show a processing system for controlling a HVAC system according to various embodiments;
- FIG. 3 and FIG. 5A each show a processing system for training a comfort model used to control a HVAC system according to various embodiments;
- FIG. 4A shows a method of controlling a HVAC system according to various embodiments;
- FIG. 4B shows a method of training a comfort prediction model used to control a HVAC system according to various embodiments;
- FIG. 6A shows a processing system of a linear programming optimization for determining running parameters of a HVAC system considering constraints, FIG. 6B shows a processing system for determining parameters to be controlled, and FIG. 6C shows exemplary constraints considered in an optimization process, according to various embodiments;
- FIG. 7A shows a processing system for determining a weight matrix and FIG. 7B shows an illustration of an exemplary weighted correlation according to various embodiments;
- FIG. 8A shows a processing system for determining a number of occupants to be considered in controlling the HVAC system and FIG. 8B shows a pre-processing of user devices prior to determining a number of occupants, according to various embodiments; and
- FIG. 9A and FIG. 9B show a processing system for controlling a HVAC system according to various embodiments.

**Detailed description**

The following detailed description refers to the accompanying drawings that show, by way of illustration, specific details and embodiments in which the disclosure may be practiced. These embodiments are described in sufficient detail to enable those skilled in the art to practice the disclosure.

Embodiments described in the context of one of the methods are analogously valid for the other methods. Similarly, embodiments described in the context of a HVAC system are analogously valid for a method, and vice-versa.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

In the context of various embodiments, the articles "a", "an" and "the" as used with regard to a feature or element include a reference to one or more of the features or elements.

As used herein, the term "and/or" includes any and all combinations of one or more of the associated listed items.

In an embodiment, a "computer" may be understood as any kind of a logic implementing entity, which may be hardware, software, firmware, or any combination thereof. Thus, in an embodiment, a "computer" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "computer" may also be software being implemented or executed by a processor, e.g. any kind of computer program, e.g. a computer program using a virtual machine code such as Java. A "computer "may be or may include one or more processors. Any other kind of implementation of the respective functions which will be described in more detail below may also be understood as a "computer" in accordance with an alternative embodiment.

A "memory" may be used in the processing carried out by a computer and/or may store data used by the computer. A "memory" used in the embodiments may be a volatile memory, for example a DRAM (Dynamic Random Access Memory) or a non-volatile memory, for example a PROM (Programmable Read Only Memory), an EPROM (Erasable PROM), EEPROM (Electrically Erasable PROM), or a flash memory, e.g., a floating gate memory, a charge trapping memory, an MRAM (Magnetoresistive Random Access Memory) or a PCRAM (Phase Change Random Access Memory).

A "comfort model" as used herein, may be any kind of model capable to predict a thermal comfort (in some aspects referred to as temperature comfort) responsive to inputting one or more parameters and/or information as described herein. Illustratively, a "comfort model" may map the inputted parameters and/or information in accordance with the ones described herein to a predicted thermal comfort. A "comfort model" may be associated with a specific user or occupant of an indoor environment controlled by a HVAC system. Illustratively, a "comfort model" may be a user-specific comfort model. A "model" may be, for example, based on machine learning (e.g., may employ a machine learning algorithm). Illustratively, a "model" may be adapted (e.g., trained) using machine learning. A "model" may be a decision tree model, a random forest model, a gradient boosting model, a linear regression model, a support vector machine, a k-nearest neighbor model, a neural network, etc. A "neural network" may be any kind of neural network, such as an autoencoder network, a convolutional neural network, a variational autoencoder network, a sparse autoencoder network, a recurrent neural network, a deconvolutional neural network, a generative adversarial network, a forward-thinking neural network, a sum-product neural network, etc. A "neural network" may include any number of layers. A neural network may be trained via any training principle, such as backpropagation.

A "temperature comfort" or "thermal comfort", as used herein, may be a condition of mind of an individual user that expresses a satisfaction of the user with the thermal environment. For example, a thermal comfort of a user or occupant may be described as a number in a range from -C to +C having arbitrary increments, wherein "C" may be any integer number equal to or greater than "1". The boundaries -C and +C of the range may refer to a category "hot" (i.e., the user or occupant feeling hot) and a category "cold" (i.e., the user or occupant feeling cold), respectively, or vice versa. For example, in the case of C=1, the user feedback may include one of the three options -1 (e.g., indicating "cold"), 0 (e.g., indicating "comfortable"), or +1 (e.g., indicating "hot").

Various aspects relate to a method which predicts a respective thermal comfort of each of a plurality of users or occupants and controls the HVAC system such that an overall thermal comfort of the plurality of users or occupants is increased. This allows to increase the overall thermal comfort without requiring real-time feedback from the plurality of users or occupants.

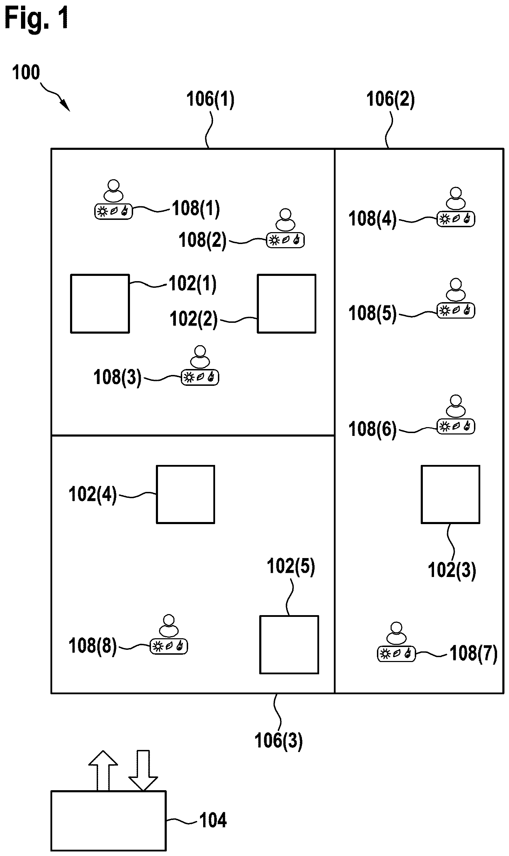

**FIG. 1** shows an exemplary HVAC system 100 according to various embodiments. The HVAC system may be or may include a variable air flow, a variable refrigerant flow (VRF) system, and/or a (e.g., water-based) chiller system. The HVAC system 100 may include a plurality of HVAC devices 102(n=1 to N). N may be any integer number equal to or greater than one. A HVAC device as used herein may be any kind of device capable to change environmental conditions in a surrounding of the device. Each HVAC device 102(n) of the plurality of HVAC devices 102(n=1 to N) may be configured to change one or more environmental parameters in accordance with set target parameters. Each HVAC device 102(n) of the plurality of HVAC devices 102(n=1 to N) may be configured to control (e.g., to keep stable, e.g., to change) one or more environmental parameters in a surrounding of the respective HVAC device in accordance with set running parameters (e.g., a set HVAC temperature). Running parameters of a HVAC device, as used herein, may be any kind of parameters associated with changing environmental conditions, such as a fan speed, a valve opening (e.g., of a valve for controlling a flow of a cooling liquid, such as a throughput of cooling water), etc. The fan speed may be represented as an integer value (e.g., in the range from 1 to 7) or as a non-numeric description (e.g., high, mid, low). The valve opening may be represented by a pulse value indicating the opening degree (e.g., a value in a range from about 0 to about 500) or as a percentage indicating the opening degree (between closed and open). An environmental parameter of the one or more environmental parameters may be, for example, a temperature, a humidity, or a dew point. The HVAC system 100 may be associated with an indoor environment (e.g., an environment in a building). The indoor environment may include one or more zones (e.g., regions) 106(m=1 to M). M may be any integer number equal to or greater than one. A zone associated with the HVAC system 100 may be a room within the indoor environment. Each zone of the one or more of zones 106(m=1 to M) may be associated at least one HVAC device 102(n) of the plurality of HVAC devices 102(n=1 to N). The at least one HVAC devices associated with a zone may be configured to control (e.g., to keep stable, e.g., to change) one or more environmental parameters within the zone. At a specific time, users (in some aspects referred to as occupants) may occupy a zone of the one or more of zones 106(m=1 to M). At a specific time, one or more users 108(u=1 to U) may occupy the one or more of zones 106(m=1 to M). U may be any integer number equal to or greater than one. It is understood that, at some time, the indoor environment may also be empty such that the one or more of zones 106(m=1 to M) may not be occupied by any user. Each user of the one or more users 108(u=1 to U) may be associated with at least one user device. The HVAC system 100 may include a control device 104. The control device 104 may be coupled to a memory (e.g., the memory 202). The memory may be an internal memory (i.e., the control device 104 may include the memory) and/or an external memory (e.g., a cloud). The control device 104 may be coupled to a computer (e.g., the computer 210, e.g., the computer 310). The computer may be an internal computer (i.e., the control device 104 may include the computer) and/or an external computer (e.g., the control device 104 may employ cloud computing). The memory associated with the control device 104 may be used in the processing carried out by the computer associated with the control device 104. Each user device may be configured to provide (e.g., to transmit, e.g., to wirelessly transmit) user feedbacks which describe a thermal comfort of the user using the user device to the control device 104.

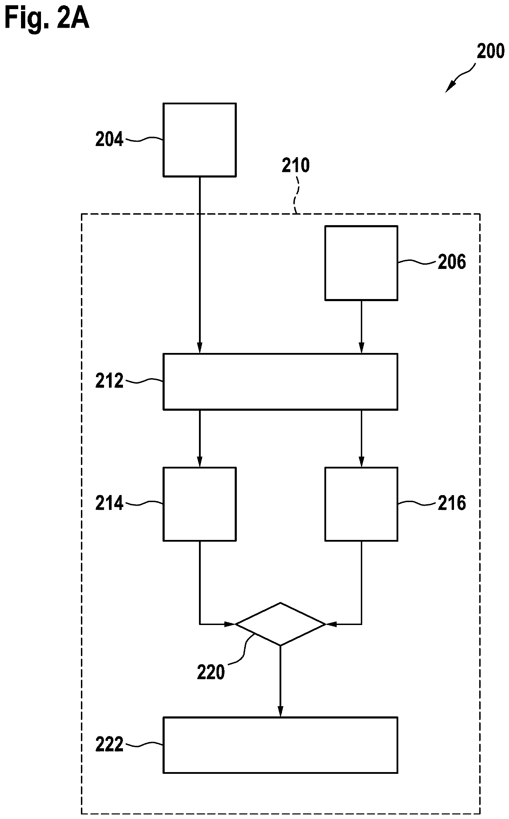

**FIG. 2A** to **FIG. 2C** each show a processing system 200 for controlling a HVAC system according to various embodiments. The HVAC system 100 may be configured to carry out the processing system 200. In the following, the processing system 200 is described with reference to the HVAC system 100 for illustration. It is noted that any other HVAC system may be capable to carry the processing system 200. The processing system 200 may include a computer 210. The processing system 200 may include a memory 202. The computer 210 may be configured to acquire (e.g., from the memory 202) respective current running parameters 204 of each of the plurality of HVAC devices 102(n=1 to N). The computer 210 may be configured to implement a plurality of trained comfort models 212. The plurality of trained comfort models 212 may include a respective trained comfort model for each of the plurality of users 108(U=1 to U). Each trained comfort model of the plurality of trained comfort models 212 may be configured to generate a predicted thermal comfort of the user associated with the respective trained comfort model responsive to inputting running parameters of each of the plurality of HVAC devices 102(n=1 to N).

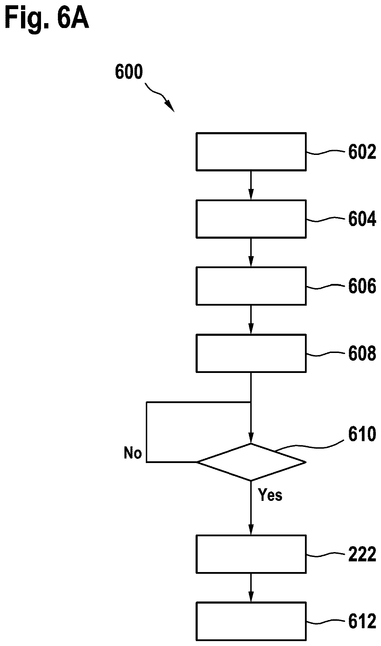

With reference to FIG. 2A, the computer 210 may be configured to determine a total predicted current thermal comfort 214 representing all predicted thermal comforts, which are generated by the plurality of trained comfort models 212 responsive to inputting the respective current running parameters 204 of each of the plurality of HVAC devices 102(n=1 to N). The total predicted current thermal comfort 214 may be a sum or an average of all predicted thermal comforts. The computer 210 may be configured to determine respective running parameters 206 of each of the plurality of HVAC devices 102(n=1 to N) such that a total predicted new thermal comfort 216 representing the predicted thermal comforts, which are generated by the plurality of trained comfort models 212 responsive to inputting the respective running parameters 206 of each of the plurality of HVAC devices 102(n=1 to N) is changed (e.g., increased) as compared to the total predicted current thermal comfort 214. In the case that the total predicted new thermal comfort 216 is greater than the total predicted current thermal comfort 214 and/or that one or more predefined constraints (see, for example, FIG. 6A to FIG. 6C) are fulfilled (in 220), the computer 210 may be configured to determine the respective running parameters 206 of each of the plurality of HVAC devices 102(n=1 to N) as new running parameters 222.

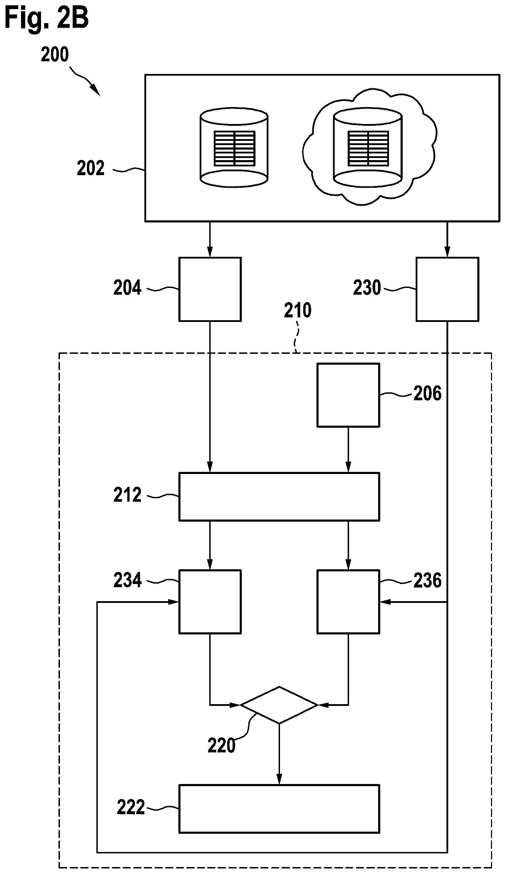

With reference to FIG. 2B, the memory 202 may store a weight matrix 230. The weight matrix 230 may include, for each trained comfort model of the plurality of trained comfort models 212, a respective weight value for each of the plurality of HVAC devices 102(n=1 to N). The computer 210 may be configured to determine a weighted total predicted current thermal comfort 234 by (1) firstly multiplying each predicted current thermal comfort, which is predicted by the respective trained comfort model for the respective current running parameters 204 of each of the plurality of HVAC devices 102(n=1 to N), with the weight values of the weight matrix 230 associated with the respective trained comfort model to determine a respective weighted current thermal comfort, and (2) secondly determining the weighted total predicted current thermal comfort 234 using all (e.g., a sum of, e.g., an average of) weighted current thermal comforts. The computer 210 may be configured to determine a respective weighted predicted thermal comfort for each of the plurality of HVAC devices 102(n=1 to N). A respective weighted total predicted current thermal comfort (wpred) of a HVAC device 102(n) may be determined as given by the equation (1): $wpred(n) = \sum_{u=1}^{u=U} pred(u) * w_{u,n}$, wherein $w_{u,n}$ is the weight value of the user u for the HVAC device n, and wherein pred(u) is the prediction of the user u as generated by the associated trained comfort model. The weighted total predicted current thermal comfort 234 may be determined by $wpred = \sum_{n=1}^{n=N} wpred(n)$. In this case, the computer 210 may be configured to determine the respective running parameters 206 of each of the plurality of HVAC devices 102(n=1 to N) such that a weighted total predicted new thermal comfort 236 determined similar to the weighted total predicted current thermal comfort 234, but for the respective running parameters 206 is changed (e.g., increased) as compared to the weighted total predicted current thermal comfort 234. In the case that the weighted total predicted new thermal comfort 236 is greater than the total predicted current thermal comfort 234 and/or that the one or more predefined constraints are fulfilled (in 220), the computer 210 may be configured to determine the respective running parameters 206 of each of the plurality of HVAC devices 102(n=1 to N) as the new running parameters 222.

The computer 210 may be configured to provide control instructions to control the HVAC system 100 in accordance with the determined new running parameters 222. The new running parameters 222 may include respective new running parameters for each of the plurality of HVAC devices 102(n=1 to N), such as a new set HVAC temperature of the respective HVAC device 102(n). The new set HVAC temperature may be described as a temperature change, $\Delta T_n$, compared to a current set HVAC temperature of the respective HVAC device. The temperature change, $\Delta T_n$, of a HVAC device 102(n) may be determined by: $\Delta T_n = -wpred * S$, wherein S is a predefined constant. For example, the average users are predicted to feel hot (e.g., +C), the set HVAC temperature of the HVAC device 102(n) may be reduced by S times the +C (in K). An increased thermal comfort may increase a productivity and/or may reduce a loss of working hours due to sickness of user or occupants.

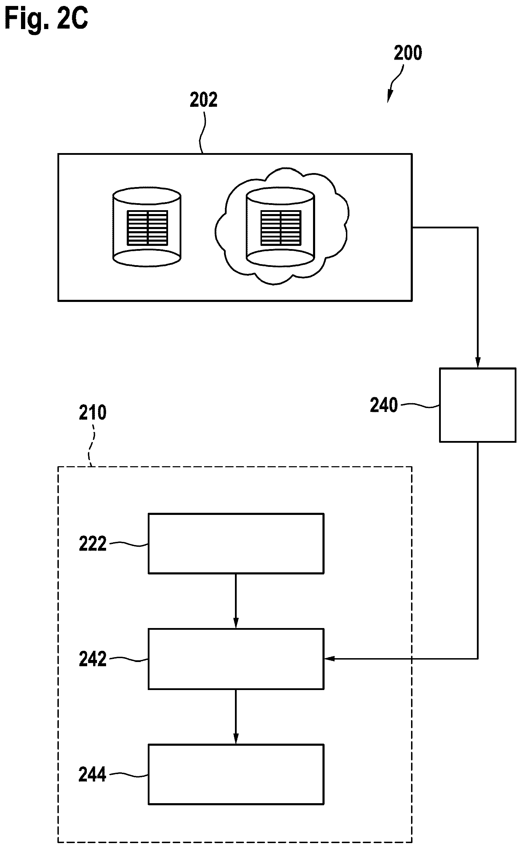

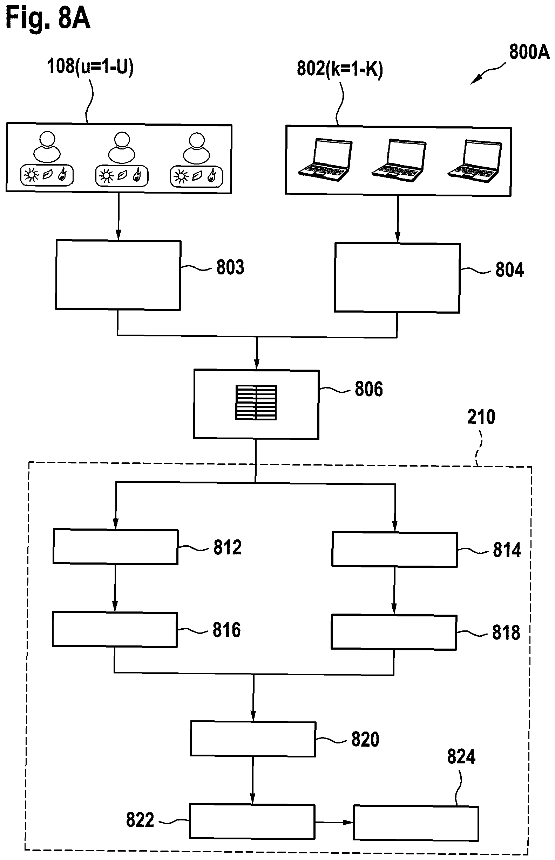

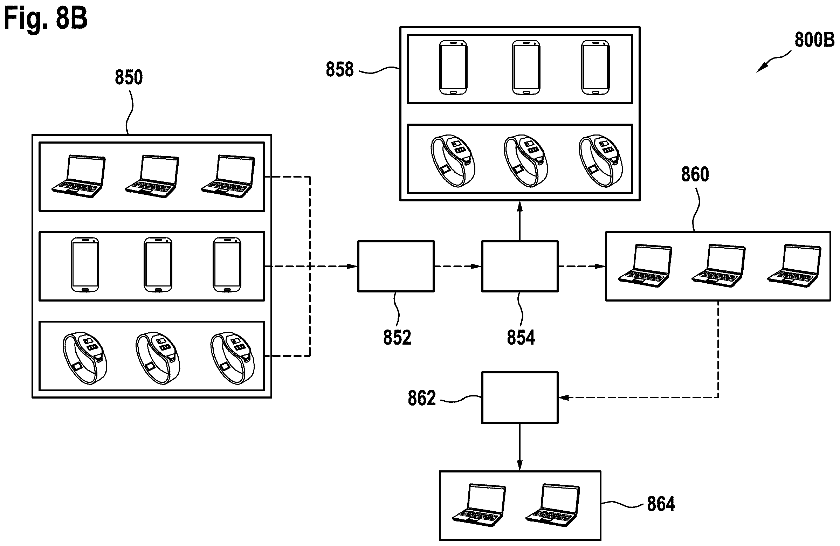

With reference to FIG. 2C, the memory 202 may store occupancy information 240 which describe an occupancy of people within the indoor environment of the HVAC system 100. The occupancy information 240 may be acquired via one or more (e.g., infrared-based, e.g., ultrasonic-based, e.g., radar-based, e.g., microwave-based, etc.) occupancy sensors. The computer 210 may be configured to determine the occupancy information 240 using devices connected to a local short range network (e.g., a Wireless Fidelity network), as described with reference to FIG. 8A and FIG. 8B. The computer 210 may be configured to adapt the determined new running parameters 222 using the occupancy information 240. For example, a number of occupants (e.g., a total number of occupants, e.g., a number of occupants within the same zone) may influence a cooling/heating rate and the computer 210 may be configured to determine this influence to determine the adapted new running parameters 242. The computer 210 may be configured to provide control instructions 244 to control the HVAC system 100 in accordance with the adapted new running parameters 242.

Illustratively, the processing system 200 may be capable to handle thermal comfort needs of a plurality of users concurrently.

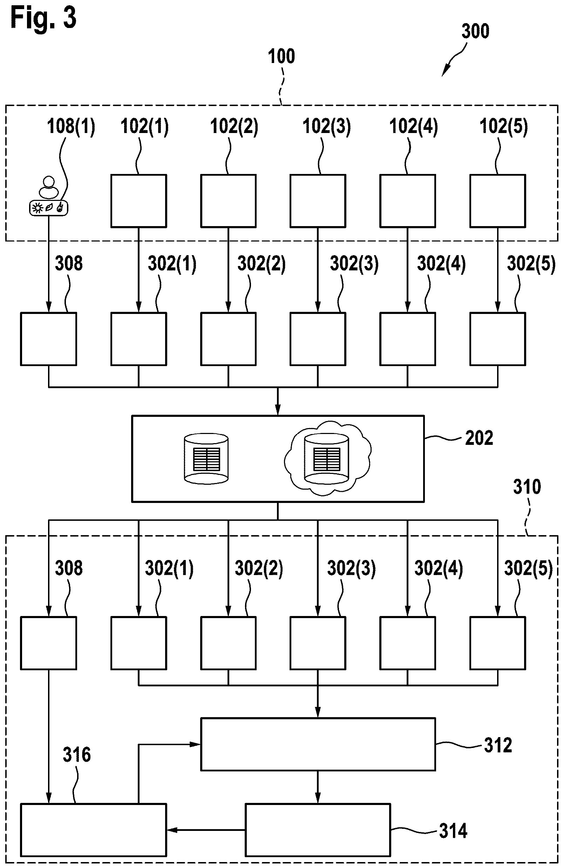

FIG. 3 shows a processing system 300 for training a comfort model 312 used to control a HVAC system (e.g., the HVAC system 100) according to various embodiments. The processing system 300 shows the training of the comfort model 312 exemplarily for the user 108(1) of the plurality of users 108(u=1 to U). Similarly, a comfort model may be trained for each user 108(u) of the plurality of users 108(u=1 to U). The plurality of comfort models trained for each of the plurality of users 108(u=1 to U) may provide the plurality of comfort models 212. The processing system 300 may include a computer 310 (e.g., configured similarly to the computer 210). The user 108(1) may be associated with at least one user device. The at least one user device may be configured to provide a plurality of user feedbacks 308. Each of the plurality of user feedbacks 308 may describe a thermal comfort of the user 108(1) at a respective point in time. At each point time associated with the plurality of user feedbacks 308, the computer 310 may be configured to determine respective running parameters 302(n) of each HVAC device 102(n) of the plurality of HVAC devices 102(n=1 to N). For example, the plurality of HVAC devices 102(n=1 to N) and/or the computer 310 may be configured to continuously detect the respective running parameters of each of the plurality of HVAC devices 102(n=1 to N) and to store the detected running parameters in association with the point in time at which the running parameters are detected in the memory 202. The computer 310 may be configured to acquire the respective running parameters 302(n) of each HVAC device 102(n) of the plurality of HVAC devices 102(n=1 to N) for each point time associated with the plurality of user feedbacks 308 from the memory 202. The computer 310 may be configured to implement the comfort model 312. The comfort model 312 may be configured to generate a predicted thermal comfort 314 responsive to inputting the running parameters 302(n=1 to N) of each of the plurality of HVAC devices 102(n=1 to N) associated with a respective user feedback of the plurality of user feedbacks 308 into the comfort model 312. The computer 310 may be configured to use the comfort model 312 to generate a respective predicted thermal comfort 314 for each user feedback of the plurality of user feedbacks 308. The computer 310 may be configured to, for each user feedback of the plurality of user feedbacks 308, determine a loss value 316 by comparing the predicted thermal comfort 314 with the thermal comfort described by the user feedback. The computer 310 may be configured to, for each user feedback of the plurality of user feedbacks 308, train the comfort model 312 to reduce the loss value 316.

A respective comfort model 312 may be trained for each user 108(u) of the plurality of users 108(u=1 to U) and the trained comfort models may be used as plurality of trained comfort models 212. One or more of the users 108(u) of the plurality of users 108(u=1 to U) may provide additional user feedbacks while the computer 210 carries out the processing system 200. The computer 210 may be configured to further train each comfort model of the plurality of trained comfort models 212 in accordance with the processing system 300 using the additional feedbacks.

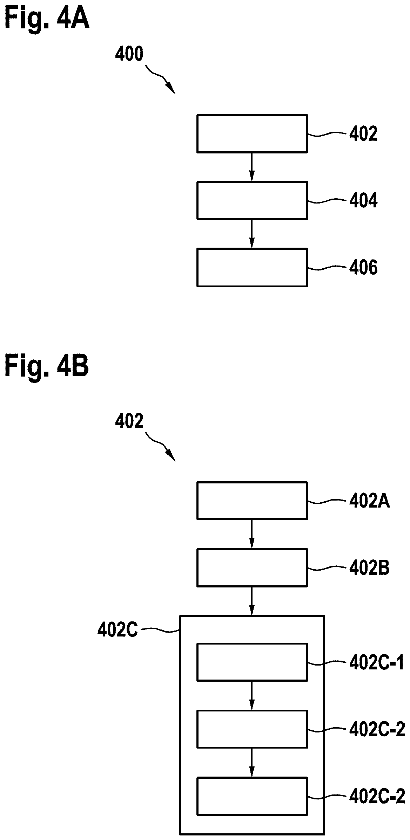

**FIG. 4A** shows a method 400 of controlling a HVAC system according to various embodiments. The method 400 may include providing a respective trained comfort model for each user (e.g., a user device associated with the user) of a plurality of users (e.g., of a plurality of user devices, wherein each user device is associated with a respective user) (in 402). The method 400 may include determining respective running parameters of each HVAC device of a plurality of HVAC devices such that a total predicted thermal comfort representing all predicted thermal comforts, which are generated by the comfort models responsive to inputting the running parameters of each of the plurality of HVAC devices into each comfort model, is increased (in 404). The method 400 may include controlling the HVAC system in accordance with the determined running parameters (in 406). **FIG. 4B** shows a method to obtain a trained comfort model of the trained comfort models (via a training method). The method may include a user device associated with the comfort model providing a plurality of user feedbacks (in 402A). Each user feedback of the plurality of user feedbacks may describe a thermal comfort of a user associated with the user device. Each user feedback of the plurality of user feedbacks may be associated with a respective point in time (e.g., at which is user feedback is provided). The method may include, at each point in time associated with the plurality of user feedbacks, each HVAC device of the plurality of HVAC devices detecting running parameters of the respective HVAC device (in 402B). The method may include, for each user feedback of the plurality of user feedbacks (in 402C): inputting the running parameters, which are detected at the point in time associated with the respective user feedback, of each of the plurality of HVAC devices into the comfort model to generate a predicted thermal comfort (in 402C-1); determining a loss value by comparing the predicted thermal comfort with the thermal comfort described by the respective user feedback (in 402C-2); and training the comfort model to be used for controlling the HVAC system to reduce the loss value (in 402C-3).

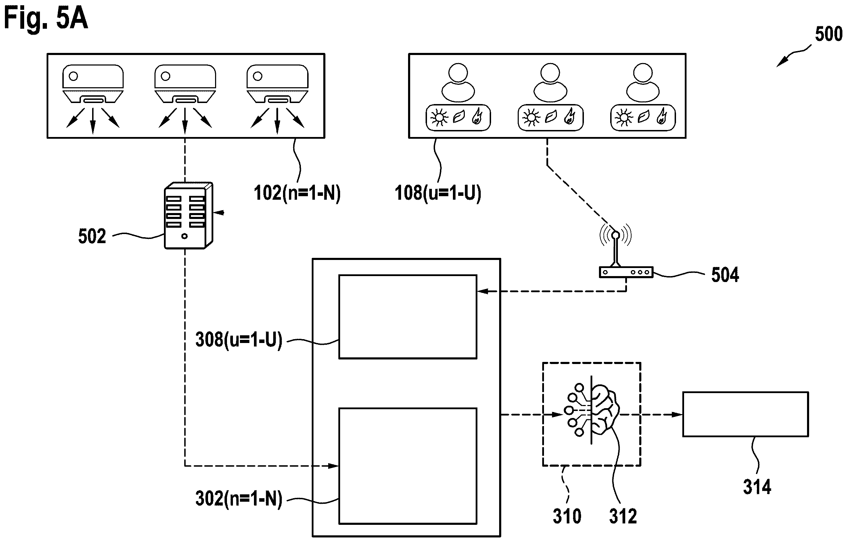

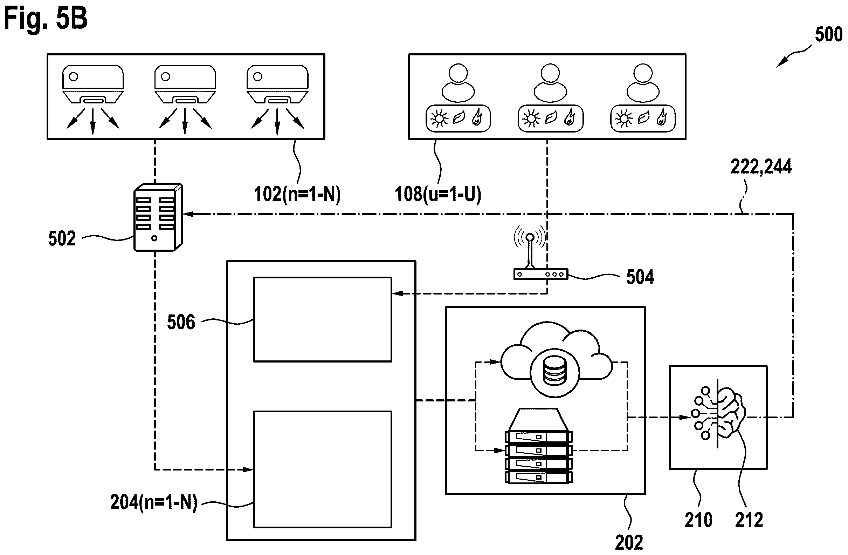

**FIG. 5A** shows a processing system 500 for training a comfort model 312. The processing system 500 may include a HVAC controller 502 configured to control the plurality of HVAC devices 102(n=1 to N) and to detect their respective running parameters 302(n). The HVAC controller 502 may be a Bacnet mainframe in a Building Management System or may be a central controller of a VRF system and/or chiller system. The running parameters 302(n) of a HVAC device 102(n) may include an identification (Indoor Unit ID) of the HVAC device, an air temperature, a fan speed, a valve opening, and/or the associated point in time as time stamp. The processing system 500 may include a wireless device 504 (e.g., a router) configured to receive the plurality of user feedbacks 308(u=1 to U) of each user 108(u). A user feedback may include an ID (e.g., a Voter ID) of the user 108(u), the associated thermal comfort (e.g., as Voter Feedback), and the associated point in time as time stamp. **FIG. 5B** shows the processing system 500 used for controlling the HVAC system. The current running parameters 204(n) of a HVAC device 102(n) may include an identification (Indoor Unit ID) of the HVAC device, an air temperature, a fan speed, a valve opening, and/or the associated point in time as time stamp. One or more user devices associated with a respective user 108(u) may provide additional user feedbacks 506. An additional user feedback may include an ID of the user 108(u), the associated thermal comfort, and the associated point in time as time stamp.

**FIG. 6A** shows an exemplary optimization routine 600 to determine the new running parameters 222. The optimization routine 600 may include grouping the user feedbacks 308 and the trained comfort models 212 by zone 106(m) (of the one or more of zones 106(m=1 to M)) (in 602). The user feedbacks 308 may be grouped with the HVAC devices of the plurality of HVAC devices which are located in the same zone (for localization of user devices, which provide the respective user feedbacks 308, see description of FIG. 8A and FIG. 8B). The optimization routine 600 may include generating an objective function (in 604). A matrix, A, may include a predicted user comfort, $a_{m,n}$, as predicted by the

$$A = \begin{pmatrix} a_{1,1} & \cdots & a_{1,n} \\ \vdots & \ddots & \vdots \\ a_{m,1} & \cdots & a_{m,n} \end{pmatrix}$$

associated comfort model: , wherein m represents the respective user, u, and n represents the number of HVAC features associated with a user feedback (i.e., a number of increments in the range from -C to +C). The objective function may, for example, describe a total discomfort. The objective function may be determined by:

$$f = \sum_{i=0}^{m} A_{i,j}$$

, wherein j represents the respective HVAC device, n. This optimization function may be minimized using an optimization algorithm.

The optimization routine 600 may include setting constraints for discomfort limits (in 606). A discomfort limit constraint may be or may include a predefined comfort constraint representing a minimum predicted thermal comfort and/or a maximum change of a predicted current thermal comfort. A discomfort limit constraint may be or may include a predefined total comfort constraint representing a minimum total predicted thermal comfort and/or a maximum change of the total predicted current thermal comfort. The optimization routine 600 may include setting constraints for controllable parameters (in 608). As an example, the limit constraints may be set as two inequality constraints described by the equation:

$$Ax < V_{ub}$$
$$-Ax < -V_{lb}$$

, wherein x is the vector of the HVAC features, wherein $V_{ub}$ is an upper bound, and wherein $V_{lb}$ is a lower bound. As an example, constraints for controllable parameters may be defined as equality constraints using a diagonal matrix, E:

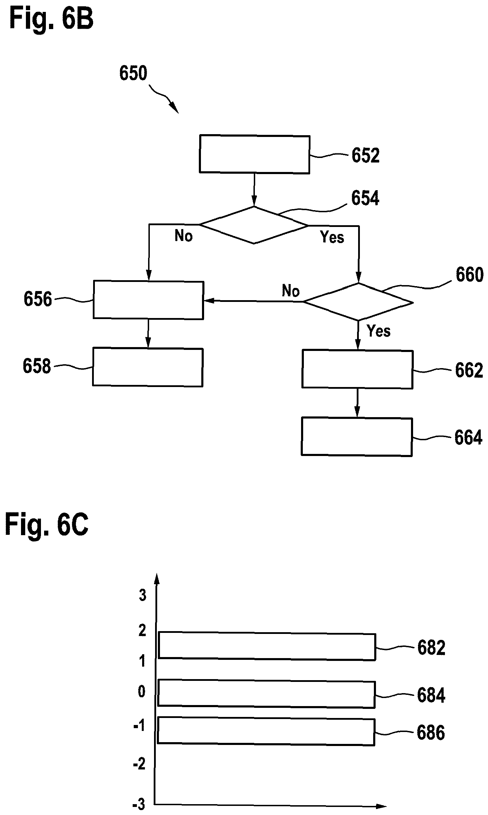

Ex = b, wherein the vector b may include either 0 in the case that the respective control parameter is controllable or the current HVAC feature value in the case that the control parameter is not controllable (see, for example, FIG. 6B);

$$E = \begin{pmatrix} 1 & 0 & 0 \\ 0 & 1 & 0 \\ 0 & 0 & 0 \end{pmatrix}$$

$$b = \begin{pmatrix} x_1 \\ x_2 \\ 0 \end{pmatrix} .$$

The optimization routine 600 may include an optimization routine, such as a linear programming optimization routine (in 610). The optimization routine may provide the new running parameters 222. The HVAC system may be controlled to modify (e.g., to change, e.g., to keep) the set HVAC temperature of each of the plurality of HVAC devices to the new running parameters 222 (in 612). **FIG. 6B** shows an exemplary method of determining the controllable parameters (used in 608). For example, a predefined load constraint representing a maximum load of the HVAC system and/or a maximum change of a current load of the HVAC system may be set. The predefined load constraint may be associated with the new running parameters 222. For example, a load prediction model may be used to predict the load of the HVAC system for the new running parameters 222. The method may include providing a list of HVAC parameters (e.g., stored in the memory 202) (in 652). The method may include, for each HVAC parameter in the list of HVAC parameters, determining whether the HVAC parameter is controllable (in 654). In the case that the respective HVAC parameter is controllable ("Yes" in 654), the method may include determining whether a control of the HVAC parameter is desired (in 660). In the case that the respective HVAC parameter is not controllable ("No" in 654) or that a control of the HVAC parameter is not desired ("No" in 660), it is determined that the HVAC parameter cannot be changed (in 656). The method may include setting an equality constraint for this HVAC parameter (in 658). In the case that a control of the HVAC parameter is desired ("Yes" in 660), the method may include that the respective HVAC parameter is optimized (in 662). No equality constraint may be set for this optimized parameter (in 664). **FIG. 6C** shows an exemplary constraint setting. In this example, the thermal comfort of a user or occupant may be described as a number in a range from -3 to +3 (i.e., C=3). The constraint boundaries may be set around 0 to provide a balance between energy saving and a total thermal comfort of the users (e.g., a balance setting 684). The constraint boundaries may be set positive to provide energy saving (e.g., an energy saving setting 682) or negative to increase the total thermal comfort of the users (e.g., a comfort setting 686), or vice versa. For example, a constraint defined by the boundaries [0, 0.5] may allow to maintain the total thermal comfort and to allow for a slight energy saving (as represented by the 0.5 boundary). For example, a constraint defined by the boundaries [-0.5, 0] may allow an increase of the total thermal comfort while spending additional energy (as indicated by the load). For example, a constraint defined by the boundaries [0.5, 1] may allow a decrease of the total thermal comfort to save energy. Illustratively, thermal comforts of a plurality of users as well as energy saving requirements may be addressed. The optimization routine 600 may be carried in regular time intervals (e.g., every 15 minutes, e.g., every 1 hour, etc.).

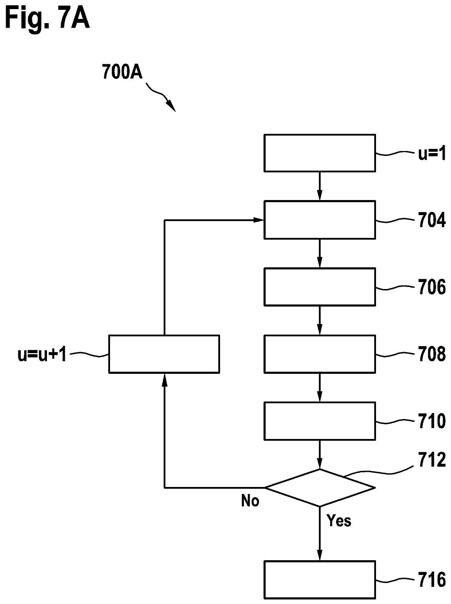

FIG. 7A shows a processing system 700A for determining a weight matrix, such as the weight matrix 230, according to various embodiments. A computer (e.g., the computer 210, e.g., the computer 310) may be configured to carry out the processing system 700A for each user 108(u) of the plurality of users 108(u=1 to U) starting with the first user 108(u=1). The computer may select all user feedbacks 308(u) associated with the respective user 108(u) (in 704). Each user feedback of the plurality of user feedbacks 308(u) associated with the respective user 108(u) may be categorized into a first category "cold" indicating that the user 108(u) is feeling cold (also referred to as cold feedback), a second category "comfortable" indicating that the user 108(u) is feeling comfortable, and a third category "hot" indicating that the user 108(u) is feeling hot. The computer may select the user feedbacks of the user 108(u) which are categorized as "cold" (in 706). For example, the plurality of user feedbacks 308(u) associated with the respective user 108(u) may include two or more cold feedbacks. The computer may be configured to, for each point in time associated with the cold feedbacks, determine a respective cooling load of each HVAC device 102(n) of the plurality of HVAC devices 102(n=1 to N) using the running parameters of the respective HVAC device 102(n). The cooling load of a HVAC device 102(n) may be described by capacity value. The capacity value may be a product of a mass flow rate and an enthalpy change as a function of a temperature change. The temperature change of a fluid may be considered constant (e.g., equal to 5 K in the case of a chiller system, e.g., equal to 20 K in the case of a refrigerant-based system or a split system). The temperature change may also be detected using one or more sensors. The mass flow rate may be determined using (e.g., in a direct proportionality or multiplied by a factor indicating a size of a respective valve associated with the valve opening) the valve opening (which may be one of the running parameters of a HVAC device). An example of resulting cooling loads of each HVAC device 102(n) of the plurality of HVAC devices 102(n=1 to 4) for three cold feedbacks of the first user 108(u=1) is shown in table 1:

| occupant | user feedback | 102(1) | 102(2) | 102(3) | 102(4) |
|----------|---------------|--------|--------|--------|--------|
| u=1 | -1 | 20 | 5 | 20 | 25 |
| u=1 | -1 | 15 | 0 | 70 | 10 |
| u=1 | -1 | 5 | 30 | 10 | 0 |

The computer may be configured to determine, for each HVAC device 102(n) of the plurality of HVAC devices 102(n=1 to N), a cooling load sum by summing up all cooling loads determined for the points in time associated with the respective user 108(u) (in 708). An example of resulting cooling load sums for each HVAC device is shown in table 2:

| occupant | 102(1) | 102(2) | 102(3) | 102(4) |
|----------|--------|--------|--------|--------|
| u=1 | 300 | 250 | 50 | 350 |

The computer may be configured to store the resulting cooling load sums in a memory (e.g., the memory 202). The computer may be configured to determine whether all users of the plurality of users 108(u=1 to U) are processed (in 712). In the case that not all users are processed ("No" in 712), the processing, as described above, may be carried out for the next user, 108(u=u+1). In the case that, for each of the plurality of users 108(u=1 to U), respective cooling load sums for each HVAC device are determined ("Yes" in 712), the computer may determine the weight matrix 230 (in 716). An example of resulting cooling load sums for U=3 and N=4 is shown in in table 3:

| occupant | 102(1) | 102(2) | 102(3) | 102(4) |
|----------|--------|--------|--------|--------|
| u=1 | 300 | 250 | 50 | 350 |
| u=2 | 250 | 150 | 100 | 450 |
| u=3 | 200 | 400 | 150 | 50 |

The computer may be configured to determine, for each of the plurality of users 108(u=1 to U), for each HVAC device 102(n) of the plurality of HVAC devices 102(n=1 to N), a respective weight value, $w_{u,n}$. Each weight value, $w_{u,n}$, may be determined as a fraction of the determined cooling load sum, $cap_{u,n}$, associated with the user 108(u) and the HVAC device 102(n) from a total cooling load sum. The total cooling load sum may be a (e.g., cumulative) sum of all determined cooling load sums of the plurality of HVAC devices 102(n=1 to N). A respective weight value, $w_{u,n}$, may be determined by the equation: $w_{u,n} = \frac{cap_{u,n}}{\sum_{n=1}^{n=N} cap_{u,n}}$ . The weight matrix 230 may include all weight value, $w_{u,n}$, from u=1 to u=U and from n=1 to n=N. An exemplary weight matrix for U=3 and N=4 is shown in in table 4:

| occupant | 102(1) | 102(2) | 102(3) | 102(4) |
|---|---|---|---|---|
| u=1 | 0.32 | 0.26 | 0.05 | 0.37 |
| u=2 | 0.26 | 0.16 | 0.11 | 0.47 |
| u=3 | 0.25 | 0.5 | 0.19 | 0.06 |

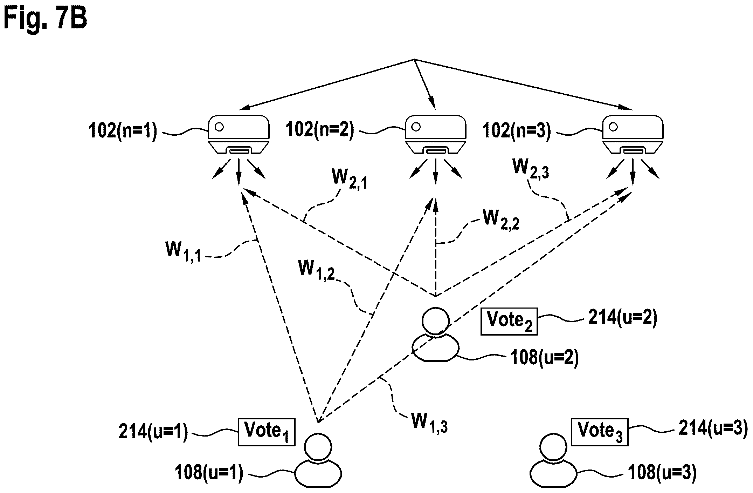

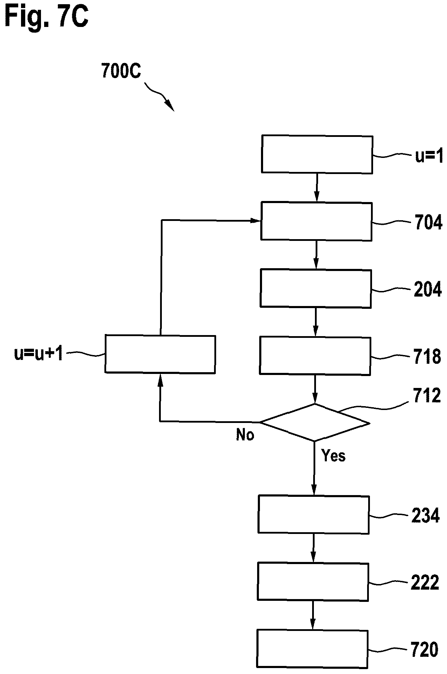

**FIG. 7B** shows an illustration of an exemplary weighted correlation of users 108(u) and HVAC devices 102(n). Illustratively, the weight matrix 230 allows to identify which HVAC device 102(n) is affecting the thermal comfort of a user or occupant most improving a user-specific control of the HVAC system 100. Optionally, the HVAC devices may be grouped to respective zones of the one or more zones 106(m=1 to M) and a respective weight matrix may be determined for each zone. **FIG. 7C** shows a flow diagram of a method 700C using the weight matrix 230 in accordance with the processing system 200. The method may include, for the user feedbacks 308(u) of a respective user 108(u) (as acquired in 704), acquire the current running parameters 204 of each of the plurality of HVAC devices 102(n=1 to N). The trained comfort model associated with the respective user 108(u) may be used to determine a predicted current thermal comfort (in 718). In the case that a respective predicted current thermal comfort is determined for each user of the plurality of users 108(u=1 to U) ("Yes" in 712), the weighted total predicted current thermal comfort 234 is determined using equation (1). The method 700C may include determining the new running parameters 222 (e.g., using the optimization routine 600). The method 700C may include providing control instructions to control the HVAC system in accordance with the new running parameters 222 (in 720).

**FIG. 8A** shows a processing system 800A for determining a number of occupants to be consider in controlling the HVAC system 100 according to various embodiments. The computer 210 may be configured to carry out the processing system 800A to determine the occupancy information 240 (see FIG. 2C). Each user feedback of the plurality of user feedbacks 308 may be provided by a respective user 108(u) via a user device 802(k) of a plurality of user devices 802(k=1 to K). A user device 802(k) may be, for example, a personal button device. The personal button device may include an interface (e.g., buttons) configured to allow a user to provide a user feedback. Each user feedback provided by a user device (such as the personal button) may further include a time stamp indicating a point in time at which the feedback is provided and/or location information indicating a location of the user device within the indoor environment (e.g., indicated a zone of the one or more zones 106(m=1 to M). The computer may be configured to determine the location information via static mapping and/or via real-time by sniffing the Media-Access-Control, MAC, address of the user device. A user device 802(k) may provide the user feedbacks wirelessly (e.g., via Bluetooth, e.g., via infrared, e.g., via Wireless Fidelity). The number of MAC addresses may provide a number of occupants and may be used as occupancy information 240. To ensure user data protection, a user feedback may not include any information regarding the user device (e.g., no localization information). To associate user feedbacks with specific zones of the one or more zones 106(m=1 to M), it may be necessary to associated user feedbacks 308(u) with respective user devices 802(k) since a user device 802(k) may be localized. The computer 210 may be configured to correlate user feedbacks 308(u) to user devices 802(k) using the processing system 800A which may allow for a localization of the user feedbacks 308(u) via the correlated user devices 802(k). The plurality of user feedbacks 308 may be acquired (in 803). At each point in time associated with a user feedback, a plurality of Media-Access-Control, MAC, addresses associated with the plurality of user devices 802(k=1 to K) (e.g., which are present in a local short range network) may be detected (in 804). A table 806 may be created including, for each user feedback: a feedback identification, ID, which represents a user 108(u) who provided the respective user feedback, the time stamp associated with the user feedback, and the detected MAC addresses of the user devices 802(k) which are present in the local short range network at the respective time represented by the time stamp. The computer 210 may be configured to correlate each MAC address with a feedback ID employing a correlation metric (e.g., a leverage metric, co-occurrence-metric, a lift metric, a confidence metric, and/or a conviction metric). In the following, a leverage metric is exemplarily described. The computer 210 may count an occurrence of each pair of feedback ID and MAC address (in 812). The computer 210 may determine a support metric for each (feedback ID, MAC address) pair (in 816). The computer 210 may count an occurrence of each feedback ID and each MAC address separately (in 814). The computer 210 may determine a support metric for each feedback ID and each MAC address separately (in 818). The computer 210 may determine a leverage metric for each (feedback ID, MAC address) pair (in 820). A leverage of a feedback ID to a user device may be described by the equation:

Leverage(feedback ID→MAC address)=Support(feedback ID→MAC address) - Support(MAC address)*Support(feedback ID)

, wherein Support is the support metric counting the respective occurrence.

The computer 210 may sort the (feedback ID, MAC address) pairs by highest leverage (in 822). The computer 210 may consolidate (e.g., correlate) feedback ID and MAC address by leverage order as indicated by the sorted the (feedback ID, MAC address) pairs (in 824). Some user devices, such as laptops, may be capable to create a virtualization of their network card. This may provide additional MAC addresses and, thus, a total number of occupants may be less than the number of MAC addresses and/or the correlation metric may be falsified. **FIG. 8B** shows a pre-processing 800B of user devices to filter the MAC addresses according to various embodiments. The computer 210 may be configured to carry out the pre-processing 800B. At each point in time associated with a respective user feedback, respective device information 852 may be detected for each user device of a plurality of user devices 850. A user device may be button device having feedback buttons, a personal computer, a laptop, a tablet, a smartwatch, or a smartphone. The device information may include a time stamp, a MAC address, vendor information representing a vendor of the user device, and optionally an SSID. The computer 210 may classify (e.g., filter) the plurality of user devices 850 using the vendor information: The computer 210 may classify the MAC addresses either into a first class 860 (in some aspects referred to as first group) in the case that the vendor of the device is associated with devices which are capable to create a virtualization of their network card (e.g., a vendor associated with laptops) or into a second class 858 (in some aspects referred to as second group) otherwise. The computer 210 may filter the MAC addresses which are classified into the first class 860 such that at each point in time only one MAC address is selected for each user device (in 862). The filtering (in 862) may use the respective SSID of the device information 852 and only the user devices with the SSID in the state "DIRECT" may be selected. The filtering (in 862) may compare the first byte and the last byte of the MAC addresses and MAC addresses associated with network virtualization may be filtered in the case that only the second digit of the first byte and/or of the second byte differentiates. This filtering (in 862) may result in one or more MAC addresses representing a subgroup of the user devices 864 of the first class 860. The computer 210 may determine the user devices categorized into the second class 858 and the user devices of the subgroup of user devices 864 as the plurality of user devices 802(k=1 to K) used in the processing system 800A.

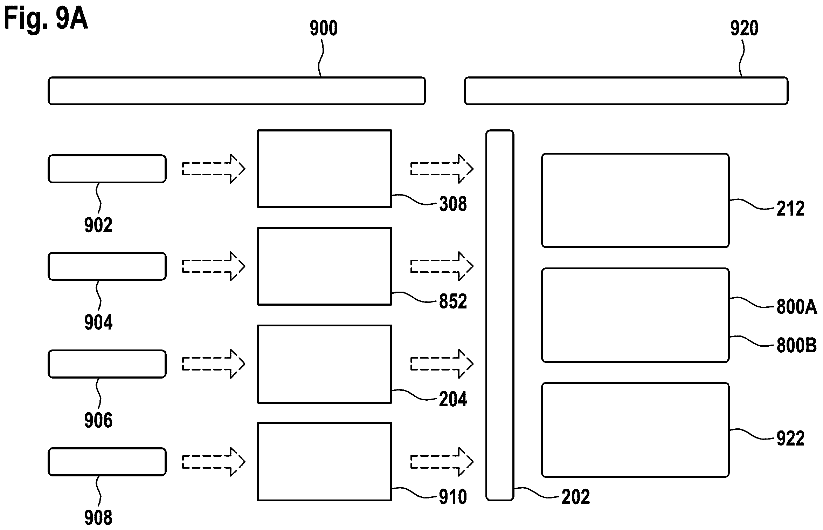

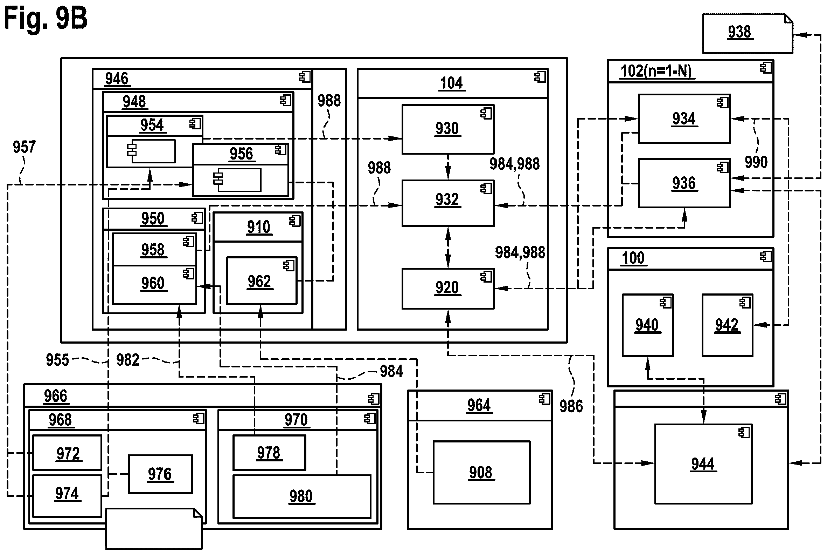

**FIG. 9A** and **FIG. 9B** show a processing system for controlling the HVAC system 100 according to various embodiments. The processing system may include a processing system for data inputting and filtering 900. The processing system may include a voting system 902 configured to provide the plurality of user feedbacks 308. The processing system may include a detect system 904 configured to acquire the device information 852 (e.g., including a user ID, a sniffer ID, and/or a time stamp) of the plurality of user devices 850. The processing system may include a HVAC access 906 configured to provide the respective current running parameters 204 of each HVA device of the plurality of HVAC devices 102(n=1 to N). The HVAC system 100 may include a plurality of environmental sensors 908 (e.g., Bluetooth-based, e.g., wireless Fidelity based, e.g., ZigBee based, etc.). Each environmental sensor may be configured to detect environmental parameters (e.g., a temperature, e.g., a humidity, e.g., a dew point, etc.) in the surrounding of the respective environmental sensor. Each environmental sensor may be configured to provide environmental data 910 including an associated sensor ID, the environmental parameters, and/or a time stamp. The processing system may acquire environmental data representing the respective environmental parameters detected by the plurality of environmental sensors. The processing system may include a processing system for analytics and learning algorithms 920. The processing system may include the plurality of trained comfort models 212 as a comfort profiling algorithm. The processing system may include a user pairing algorithm configured to carry out the processing system 800A (and optionally the processing system 800B). The processing system may include an automated HVAC control 922 configured to control the plurality of HVAC devices 102(n=1 to N) in accordance with the new running parameters 222 or adapted new running parameters 244. As described herein, the new running parameters 222 or adapted new running parameters 244 may be determined using the comfort profiling algorithm and the user pairing algorithm. With reference to FIG. 9B, the processing system may include the control device 104 (e.g., as backend local server). The control device 104 may include an FTP server 930 for data file transfer, a MySQL database server and data acquision algorithms (e.g., to acquire data provided by the voting system 902, the detect system 904, the HVAC access 906, and/or the plurality of environmental sensors 908), and/or the processing system for analytics and learning algorithms 920 (e.g., including the comfort profiling algorithm, the user pairing algorithm, and/or the automated HVAC control 922). The processing system may include the plurality of HVAC devices 102(n=1 to N) (e.g., external to the HVAC system 100). The plurality of HVAC devices 102(n=1 to N) may include HVAC Gateways 934 and/or a Building and Management System (BMS) adapter 936. The processing system may include another BMS adapter 938 in the case that the HVAC system 100 does not support a direct BacNet integration. The HVAC system 100 may include a chiller system 940 and/or a VRF system 942. The processing system may include a BMS system 944 (e.g., using BacNet, LonWorks, etc.). The processing system may include an environmental data acquisition system 964 including the plurality of environmental sensors 908. The processing system may include a user-in-the-loop system 966. The user-in-the-loop system 966 may include user devices used for an occupancy detection 968. The user devices may include mobile devices and laptop devices connected to a Wireless Fidelity (WiFi) network. The user devices may include Bluetooth beacons 972, smart devices 974 (e.g., smartphones, e.g., wearables, etc.), and/or laptops 976. The user-in-the-loop system 966 may include devices used for a comfort feedback 970. The devices may include physical buttons 978 and/or (in 980) mobile and/or desktop applications, a web interface, and/or a chatbot. The processing system may include an internet-of-things (IOT) Gateway 946. The IOT Gateway may include an occupancy detection 948 (e.g., the detect system 904), a comfort feedback 905 (e.g., the voting system 902), and/or a system for the environmental data 910. The environmental data may be received using an environmental data receiver 962. The comfort feedback (also referred to as user feedback) may be received using a feedback receiver 958. The comfort feedback may include a web server application 960. The occupancy detection 948 may include WiFi sniffers 954 (e.g., to detect the WiFi devices used in the user-in-the-loop system 966) via WiFi 955 and/or Bluetooth sniffers 957 (e.g., to detect the Bluetooth devices used in the user-in-the-loop system 966) via Bluetooth 957. The respective elements of the processing system may communicate with each other using WiFi 955, Bluetooth 957, radio signals 982, a representational state transfer (REST) application programming interface (API) 984, BacNet 986, brand-specific protocols 990 of respective HVAC devices 102(n), and/or transmission control protocol/internet protocol (TCP/IP) 988.

## Claims

1. A method (400) of controlling a heating, ventilation, and air-conditioning, HVAC, system, the HVAC system comprising a plurality of HVAC devices, the method (400) comprising:

   • training (402) a plurality of comfort models to be used for controlling the heating, ventilation, and air-conditioning, HVAC, system, wherein each comfort model of the plurality of comfort models is associated with a respective user of a plurality of users, wherein the training of a respective comfort model of the plurality of comfort models comprising:
   a user device associated with the respective comfort model providing a plurality of user feedbacks, each user feedback of the plurality of user feedbacks describing a thermal comfort of the respective user associated with the user device, wherein each user feedback of the plurality of user feedbacks is associated with a respective point in time (402A), wherein the plurality of user feedbacks comprises two or more cold feedbacks indicating that the user of the user device associated with the comfort model feeling cold;
   • determining a weight matrix (230), the weight matrix (230) includes, for each trained comfort model of the plurality of trained comfort models (212), a respective weight value for each HVAC device of the plurality of HVAC devices;
   • determining respective running parameters of each HVAC device of the plurality of HVAC devices such that a total predicted thermal comfort representing all predicted thermal comforts, which are generated by the plurality of comfort models responsive to inputting the running parameters of each of the plurality of HVAC devices into each comfort model, is increased (404), considering the determined weight value of each HVAC device of the plurality of HVAC devices associated with each comfort model of the plurality of comfort models; and
   • controlling the HVAC system in accordance with the determined running parameters (406).

2. The method (400) of claim 1,
   wherein the training of the respective comfort model of the plurality of comfort models further comprises:

   at each point in time associated with the plurality of user feedbacks, each HVAC device of the plurality of HVAC devices associated with the HVAC system detecting running parameters of the respective HVAC device (402B);
   for each user feedback of the plurality of user feedbacks (402C):
   inputting the running parameters, which are detected at the point in time associated with the respective user feedback, of each of the plurality of HVAC devices into the respective comfort model to generate a predicted thermal comfort (402C-1), determining a loss value by comparing the predicted thermal comfort with the thermal comfort described by the respective user feedback (402C-2), and training the respective comfort model to be used for controlling the HVAC system to reduce the loss value (402C-3).

3. The method (400) according to claim 1 or 2,
   wherein determining respective running parameters of each HVAC device of the plurality of HVAC devices such that a total predicted thermal comfort representing all predicted thermal comforts, which are generated by the plurality of comfort models responsive to inputting the running parameters of each of the plurality of HVAC devices into each comfort model, is increased (404) further comprises:

considering

a predefined comfort constraint representing a minimum predicted thermal comfort,

a predefined load constraint representing a maximum load of the HVAC system predicted for the running parameters, and/or

predefined total comfort constraint representing a minimum total predicted thermal comfort.

4. The method (400) according to any one of claims 1 to 3, further comprising:

• detecting a plurality of Media-Access-Control, MAC, addresses associated with a plurality of devices present in a local short range network associated with the HVAC system;

• for each detected MAC address, detecting vendor information representing a vendor of the device associated with the MAC address and classifying the MAC address either into a first class in the case that the vendor of the device is associated with a device capable to create a virtualization of a network card or into a second class otherwise;

• filtering the MAC addresses which are classified into the first class such that only one MAC address is selected for each device;

• determining a total number of occupants as a total number of MAC address, the total number of MAC addresses comprising the MAC addresses which are classified into the second class and the MAC addresses selected from the first class;

• adapting the determined running parameters using the determined total number of occupants; and

• wherein controlling the HVAC system in accordance with the determined running parameters comprises controlling the HVAC system in accordance with the adapted running parameters.

5. The method (400) according to any one of claims 1 to 4,

wherein each trained comfort model of the plurality of comfort models is associated with a respective feedback identification of a plurality of feedback identifications;

wherein the method (400) further comprises:

• providing a plurality of user feedbacks, wherein each user feedback of the plurality of user feedbacks is associated with a feedback identification of the plurality of feedback identifications and describes a thermal comfort of a user associated with the feedback identification, wherein each user feedback of the plurality of user feedbacks is provided at a respective point in time;

• at each point in time associated with a user feedback of the plurality of user feedbacks, detecting a plurality of Media-Access-Control, MAC, addresses, wherein each MAC address of the plurality of MAC addresses is associated with a device of a plurality of devices present in a local short range network associated with the HVAC system;

• correlating each MAC address of the plurality of MAC addresses with a feedback identification of the plurality of feedback identifications using the points in time associated with the plurality of user feedbacks by employing a correlation metric.

6. The method (400) according to claim 5,

wherein the correlation metric comprises a leverage metric, co-occurrence metric, a lift metric, a confidence metric, and/or a conviction metric.

7. The method (400) according to claim 5 or 6,

wherein correlating each MAC address of the plurality of MAC addresses with a feedback identification of the plurality of feedback identifications using the points in time associated with the plurality of user feedbacks by employing a correlation metric comprises:

• for each MAC address of the plurality of MAC addresses, detecting vendor information representing a vendor of the device associated with the respective MAC address and classifying the MAC address either into a first class in the case that the vendor of the device is associated with a device capable to create a virtualization of a network card or into a second class otherwise;

• filtering the MAC addresses which are classified into the first class such that at each point in time only one MAC address is selected for each device of the plurality of devices;

• correlating each MAC address classified into the second class and each MAC address selected from the first class with a feedback identification of the plurality of feedback identifications using the points in time associated with the plurality of user feedbacks by employing the correlation metric.

8. The method (400) according to any one of claims 1 to 7,

wherein for each point in time associated with the two or more cold feedbacks, determining a respective cooling load of each HVAC device of the plurality of HVAC devices using the detected running parameters of the respective HVAC device;
for each HVAC device of the plurality of HVAC devices, determining a cooling load sum by summing up all cooling loads determined for the points in time associated with the two or more cold feedbacks; and
for each HVAC device of the plurality of HVAC devices, determining the respective weight value as a fraction of the determined cooling load sum from a total cooling load, the total cooling load being a sum of all determined cooling load sums of the plurality of HVAC devices.

9. A heating, ventilation, and air-conditioning, HVAC, system (100), comprising:

• a plurality of user devices, wherein each of the plurality of user devices is configured to provide user feedbacks;
• a plurality of HVAC devices (102(1), 102(2), 102(3), 102(4), 102(5)), wherein each of the plurality of HVAC devices (102(1), 102(2), 102(3), 102(4), 102(5)) is associated with respective running parameters; and
• a control device (104) configured to control the plurality of HVAC devices (102(1), 102(2), 102(3), 102(4), 102(5)), to receive user feedbacks from the plurality of user devices, and to carry out the method of any one of claims 1 to 8.

**Patentansprüche**

1. Verfahren (400) zum Steuern eines Heizungs-, Lüftungs- und Klimatisierungs- bzw. HVAC-Systems, wobei das HVAC-System eine Mehrzahl von HVAC-Vorrichtungen umfasst, wobei das Verfahren (400) umfasst:

• Trainieren (402) einer Mehrzahl von Komfortmodellen, die zur Steuerung des Heizungs-, Lüftungs- und Klimatisierungs- bzw. HVAC-Systems verwendet werden sollen, wobei jedes Komfortmodell der Mehrzahl von Komfortmodellen mit einem jeweiligen Benutzer einer Mehrzahl von Benutzern assoziiert ist, wobei das Trainieren eines jeweiligen Komfortmodells der Mehrzahl von Komfortmodellen umfasst:
eine Benutzervorrichtung, die mit dem jeweiligen Komfortmodell assoziiert ist, stellt eine Mehrzahl von Benutzerrückmeldungen bereit, wobei jede Benutzerrückmeldung der Mehrzahl von Benutzerrückmeldungen einen thermischen Komfort des jeweiligen Benutzers beschreibt, der mit der Benutzervorrichtung assoziiert ist, wobei jede Benutzerrückmeldung der Mehrzahl von Benutzerrückmeldungen mit einem jeweiligen Zeitpunkt assoziiert ist (402A), wobei die Mehrzahl von Benutzerrückmeldungen zwei oder mehr Kaltrückmeldungen umfasst, die angeben, dass dem Benutzer der Benutzervorrichtung, die mit dem Komfortmodell assoziiert ist, kalt ist;
• Bestimmen einer Gewichtsmatrix (230), wobei die Gewichtsmatrix (230), für jedes trainierte Komfortmodell der Mehrzahl trainierter Komfortmodelle (212), einen jeweiligen Gewichtswert für jede HVAC-Vorrichtung der Mehrzahl von HVAC-Vorrichtungen beinhaltet;
• Bestimmen jeweiliger Betriebsparameter jeder HVAC-Vorrichtung der Mehrzahl von HVAC-Vorrichtungen, sodass ein gesamter vorhergesagter thermischer Komfort, der alle vorhergesagten thermischen Komforts repräsentiert, die durch die Mehrzahl von Komfortmodellen als Reaktion auf die Eingabe der Betriebsparameter von jeder der Mehrzahl von HVAC-Vorrichtungen in jedes Komfortmodell erzeugt werden, unter Berücksichtigung des bestimmten Gewichtswerts jeder HVAC-Vorrichtung der Mehrzahl von HVAC-Vorrichtungen, die mit jedem Komfortmodell der Mehrzahl von Komfortmodellen assoziiert ist, erhöht wird (404); und
• Steuern des HVAC-Systems gemäß den bestimmten Betriebsparametern (406).

2. Verfahren (400) nach Anspruch 1,
wobei das Trainieren des jeweiligen Komfortmodells der Mehrzahl von Komfortmodellen ferner umfasst:

zu jedem Zeitpunkt, der mit der Mehrzahl von Benutzerrückmeldungen assoziiert ist, detektiert jede HVAC-Vorrichtung der Mehrzahl von HVAC-Vorrichtungen, die mit dem HVAC-System assoziiert ist, Betriebsparameter der jeweiligen HVAC-Vorrichtung (402B);
für jede Benutzerrückmeldung der Mehrzahl von Benutzerrückmeldungen (402C): Eingeben der Betriebsparameter, die zu dem Zeitpunkt detektiert werden, der mit der jeweiligen Benutzerrückmeldung assoziiert ist, von jeder der Mehrzahl der HVAC-Vorrichtungen in das jeweilige Komfortmodell, um einen vorhergesagten thermischen Komfort zu erzeugen (402C-1), Bestimmen eines Verlustwerts durch Vergleichen des vorhergesagten thermischen Komforts mit dem thermischen Komfort, der durch die jeweilige Benutzerrückmeldung beschrieben wird (402C-2), und Trainieren des jeweiligen Komfortmodells, das zur Steuerung des HVAC-Systems verwendet werden soll, um den Verlustwert zu reduzieren (402C-3).

3. Verfahren (400) nach Anspruch 1 oder 2,
wobei das Bestimmen jeweiliger Betriebsparameter jeder HVAC-Vorrichtung der Mehrzahl von HVAC-Vorrichtungen, sodass ein gesamter vorhergesagter thermischer Komfort, der alle vorhergesagten thermischen Komforts repräsentiert, die durch die Mehrzahl von Komfortmodellen als Reaktion auf die Eingabe der Betriebsparameter von jeder der Mehrzahl von HVAC-Vorrichtungen in jedes Komfortmodell erzeugt werden, erhöht wird (404), ferner umfasst:

unter Berücksichtigung
einer vordefinierten Komfortbeschränkung, die einen minimalen vorhergesagten thermischen Komfort repräsentiert,
einer vordefinierten Lastbeschränkung, die eine maximale Last des HVAC-Systems repräsentiert, die für die Betriebsparameter vorhergesagt wird, und/oder
einer vordefinierten Gesamtkomfortbeschränkung, die einen minimalen gesamten vorhergesagten thermischen Komfort repräsentiert.

4. Verfahren (400) nach einem der Ansprüche 1 bis 3, ferner umfassend:

• Detektieren einer Mehrzahl von Medienzugangssteuerungs- bzw. MAC-Adressen, die mit einer Mehrzahl von Vorrichtungen assoziiert ist, die in einem mit dem HVAC-System assoziierten lokalen Kurzstreckennetzwerk vorhanden sind;
• für jede detektierte MAC-Adresse, Detektieren von Anbieterinformationen, die einen Anbieter der Vorrichtung repräsentieren, die mit der MAC-Adresse assoziiert ist, und Klassifizieren der MAC-Adresse entweder in eine erste Klasse, falls der Anbieter der Vorrichtung mit einer Vorrichtung assoziiert ist, die in der Lage ist, eine Virtualisierung einer Netzwerkkarte zu erzeugen, oder ansonsten in eine zweite Klasse;
• Filtern der MAC-Adressen, die in die erste Klasse klassifiziert sind, sodass nur eine MAC-Adresse für jede Vorrichtung ausgewählt wird;
• Bestimmen einer Gesamtanzahl von Nutzern als eine Gesamtanzahl von MAC-Adressen, wobei die Gesamtanzahl von MAC-Adressen die MAC-Adressen, die in die zweite Klasse klassifiziert sind, und die MAC-Adressen, die aus der ersten Klasse ausgewählt werden, umfasst;
• Anpassen der bestimmten Betriebsparameter unter Verwendung der bestimmten Gesamtanzahl von Nutzern; und
• wobei das Steuern des HVAC-Systems gemäß den bestimmten Betriebsparametern das Steuern des HVAC-Systems gemäß den angepassten Betriebsparametern umfasst.

5. Verfahren (400) nach einem der Ansprüche 1 bis 4,

wobei jedes trainierte Komfortmodell der Mehrzahl von Komfortmodellen mit einer jeweiligen Rückmeldeidentifikation einer Mehrzahl von Rückmeldeidentifikationen assoziiert ist;
wobei das Verfahren (400) ferner Folgendes umfasst:

• Bereitstellen einer Mehrzahl von Benutzerrückmeldungen, wobei jede Benutzerrückmeldung der Mehrzahl von Benutzerrückmeldungen mit einer Rückmeldeidentifikation der Mehrzahl von Rückmeldeidentifikationen assoziiert ist und einen thermischen Komfort eines mit der Rückmeldeidentifikation assoziierten Benutzers beschreibt, wobei jede Benutzerrückmeldung der Mehrzahl von Benutzerrückmeldungen zu einem jeweiligen Zeitpunkt bereitgestellt wird;
• zu jedem Zeitpunkt, der mit einer Benutzerrückmeldung der Mehrzahl von Benutzerrückmeldungen assoziiert ist, Detektieren einer Mehrzahl von Medienzugangssteuerungs- bzw. MAC-Adressen, wobei jede MAC-Adresse der Mehrzahl von MAC-Adressen mit einer Vorrichtung einer Mehrzahl von Vorrichtungen assoziiert ist, die in einem mit dem HVAC-System assoziierten lokalen Kurzstreckennetzwerk vorhanden sind;
• Korrelieren jeder MAC-Adresse der Mehrzahl von MAC-Adressen mit einer Rückmeldeidentifikation der Mehrzahl von Rückmeldeidentifikationen unter Verwendung der Zeitpunkte, die mit der Mehrzahl von Benutzerrückmeldungen assoziiert sind, durch Einsatz einer Korrelationsmetrik.

**6.** Verfahren (400) nach Anspruch 5,
wobei die Korrelationsmetrik eine Leverage-Metrik, Co-Occurence-Metrik, eine Lift-Metrik, eine Konfidenzmetrik und/oder eine Conviction-Metrik umfasst.

**7.** Verfahren (400) nach Anspruch 5 oder 6,
wobei das Korrelieren jeder MAC-Adresse der Mehrzahl von MAC-Adressen mit einer Rückmeldeidentifikation der Mehrzahl von Rückmeldeidentifikationen unter Verwendung der Zeitpunkte, die mit der Mehrzahl von Benutzerrückmeldungen assoziiert sind, durch Einsatz einer Korrelationsmetrik umfasst:

- für jede MAC-Adresse der Mehrzahl von MAC-Adressen, Detektieren von Anbieterinformationen, die einen Anbieter der Vorrichtung repräsentieren, die mit der jeweiligen MAC-Adresse assoziiert ist, und Klassifizieren der MAC-Adresse entweder in eine erste Klasse, falls der Anbieter der Vorrichtung mit einer Vorrichtung assoziiert ist, die in der Lage ist, eine Virtualisierung einer Netzwerkkarte zu erzeugen, oder ansonsten in eine zweite Klasse;
- Filtern der MAC-Adressen, die in die erste Klasse klassifiziert sind, sodass zu jedem Zeitpunkt nur eine MAC-Adresse für jede Vorrichtung der Mehrzahl von Vorrichtungen ausgewählt wird;
- Korrelieren jeder MAC-Adresse, die in die zweite Klasse klassifiziert wird, und jeder MAC-Adresse, die aus der ersten Klasse ausgewählt wird, mit einer Rückmeldeidentifikation der Mehrzahl von Rückmeldeidentifikationen unter Verwendung der Zeitpunkte, die mit der Mehrzahl von Benutzerrückmeldungen assoziiert sind, durch Einsatz der Korrelationsmetrik.

**8.** Verfahren (400) nach einem der Ansprüche 1 bis 7,

wobei für jeden Zeitpunkt, der mit den zwei oder mehr Kaltrückmeldungen assoziiert ist, Bestimmen einer jeweiligen Kühllast jeder HVAC-Vorrichtung der Mehrzahl von HVAC-Vorrichtungen unter Verwendung der detektierten Betriebsparameter der jeweiligen HVAC-Vorrichtung;
für jede HVAC-Vorrichtung der Mehrzahl von HVAC-Vorrichtungen, Bestimmen einer Kühllastsumme durch Aufsummieren aller Kühllasten, die für die Zeitpunkte bestimmt werden, die mit den zwei oder mehr Kaltrückmeldungen assoziiert sind; und
für jede HVAC-Vorrichtung der Mehrzahl von HVAC-Vorrichtungen, Bestimmen des jeweiligen Gewichtswerts als ein Bruchteil der bestimmten Kühllastsumme von einer Gesamtkühllast, wobei die Gesamtkühllast eine Summe aller bestimmten Kühllastsummen der Mehrzahl von HVAC-Vorrichtungen ist.

**9.** Heizungs-, Lüftungs- und Klimatisierungs- bzw. HVAC-System (100), umfassend:

- eine Mehrzahl von Benutzervorrichtungen, wobei jede der Mehrzahl von Benutzervorrichtungen dazu ausgelegt ist, Benutzerrückmeldungen bereitzustellen;
- eine Mehrzahl von HVAC-Vorrichtungen (102(1), 102(2), 102(3), 102(4), 102(5)), wobei jede der Mehrzahl von HVAC-Vorrichtungen (102(1), 102(2), 102(3), 102(4), 102(5)) mit jeweiligen Betriebsparametern assoziiert ist; und
- eine Steuervorrichtung (104), die dazu ausgelegt ist, die Mehrzahl von HVAC-Vorrichtungen (102(1), 102(2), 102(3), 102(4), 102(5)) zu steuern, um Benutzerrückmeldungen von der Mehrzahl von Benutzervorrichtungen zu empfangen, und das Verfahren nach einem der Ansprüche 1 bis 8 auszuführen.

**Revendications**

**1.** Procédé (400) de commande d'un système de chauffage de ventilation et de climatisation, HVAC, le système HVAC comprenant une pluralité de dispositifs HVAC, le procédé (400) comprenant les étapes suivantes :

- effectuer l'apprentissage (402) d'une pluralité de modèles de confort à utiliser pour contrôler le système de chauffage, ventilation et climatisation, HVAC, où chaque modèle de confort de la pluralité de modèles de confort est associé à un utilisateur respectif d'une pluralité d'utilisateurs, où l'apprentissage d'un modèle de confort respectif de la pluralité de modèles de confort comprend :
un dispositif utilisateur associé au modèle de confort respectif fournissant une pluralité de retours d'informations d'utilisateur, chaque retour d'informations d'utilisateur de la pluralité de retours d'informations d'utilisateur décrivant un confort thermique de l'utilisateur respectif associé au dispositif utilisateur, où chaque retour d'informations d'utilisateur de la pluralité de retours d'informations d'utilisateur est associée à un instant respectif (402A), où la pluralité de retours d'informations d'utilisateur comprend deux retours d'informations de froid, ou plus, indiquant que l'utilisateur du dispositif utilisateur associé au modèle de confort a froid ;
• déterminer une matrice de poids (230), la matrice de poids (230) comprenant, pour chaque modèle de confort d'apprentissage de la pluralité de modèles de confort d'apprentissage (212), une valeur de poids respective pour chaque dispositif HVAC de la pluralité de dispositifs HVAC ;
• déterminer les paramètres de fonctionnement respectifs de chaque dispositif HVAC de la pluralité de dispositifs HVAC de sorte qu'un confort thermique total prédit représentant tous les conforts thermiques prédits, qui sont générés par la pluralité de modèles de confort en réponse à l'entrée des paramètres de fonctionnement de chaque dispositif HVAC de la pluralité de dispositifs HVAC dans chaque modèle de confort, soit augmenté (404), en considérant la valeur de poids déterminée de chaque dispositif HVAC de la pluralité de dispositifs HVAC associée à chaque modèle de confort de la pluralité de modèles de confort ; et
• commander le système HVAC en fonction des paramètres de fonctionnement déterminés (406).

2. Procédé (400) selon la revendication 1,
dans lequel l'apprentissage du modèle de confort respectif de la pluralité de modèles de confort comprend en outre :

à chaque moment associé à la pluralité de retours d'informations d'utilisateur, la détection, par chaque dispositif HVAC de la pluralité de dispositifs HVAC associés au système HVAC, des paramètres de fonctionnement du dispositif HVAC respectif (402B) ;
pour chaque retour d'informations d'utilisateur de la pluralité de retours d'informations d'utilisateur (402C) :
l'entrée des paramètres de fonctionnement, qui sont détectés au moment associé au retour d'informations d'utilisateur respectif, de chacun de la pluralité de dispositifs HVAC dans le modèle de confort respectif pour générer un confort thermique prédit (402C-1), la détermination d'une valeur de perte en comparant le confort thermique prédit avec le confort thermique décrit par le retour d'informations d'utilisateur respectif (402C-2), et l'apprentissage du modèle de confort respectif à utiliser pour contrôler le système HVAC afin de réduire la valeur de perte (402C-3).

3. Procédé (400) selon la revendication 1 ou la revendication 2,
dans lequel la détermination des paramètres de fonctionnement respectifs de chaque dispositif HVAC de la pluralité de dispositifs HVAC de sorte qu'un confort thermique total prédit représentant tous les conforts thermiques prédits, qui sont générés par la pluralité de modèles de confort en réponse à l'entrée des paramètres de fonctionnement de chacun de la pluralité de dispositifs HVAC dans chaque modèle de confort, soit augmenté (404) comprend en outre l'étape suivante :

considérer
une contrainte de confort prédéfinie représentant un confort thermique minimum prédit,
une contrainte de charge prédéfinie représentant une charge maximale du système HVAC prédite pour les paramètres de fonctionnement, et/ou
une contrainte de confort total prédéfinie représentant un confort thermique total minimum prédit.

4. Procédé (400) selon l'une quelconque des revendications 1 à 3, comprenant en outre les étapes suivantes :

• détecter une pluralité d'adresses de contrôle d'accès au support, MAC, associées à une pluralité de dispositifs présents dans un réseau local à courte portée associé au système HVAC ;
• pour chaque adresse MAC détectée, détecter les informations relatives au fournisseur du dispositif associé à l'adresse MAC et classer l'adresse MAC soit dans une première classe si le fournisseur du dispositif est associé à un dispositif capable de créer une virtualisation d'une carte réseau, soit dans une deuxième classe dans le cas contraire ;
• filtrer les adresses MAC classées dans la première classe de manière à ce qu'une seule adresse MAC soit sélectionnée pour chaque dispositif ;
• déterminer le nombre total d'occupants en tant que nombre total d'adresses MAC, le nombre total d'adresses MAC comprenant les adresses MAC classées dans la deuxième classe et les adresses MAC sélectionnées dans la première classe ;
• adapter les paramètres de fonctionnement déterminés à l'aide du nombre total d'occupants déterminé ; et
• la commande du système HVAC en fonction des paramètres de fonctionnement déterminés comprenant la commande du système HVAC en fonction des paramètres de fonctionnement adaptés.

5. Procédé (400) selon l'une quelconque des revendications 1 à 4,

dans lequel chaque modèle de confort ayant fait l'objet d'un apprentissage de la pluralité de modèles de confort est associé à une identification de retour d'informations respective d'une pluralité d'identifications de retour d'informations ;

où le procédé (400) comprend en outre les étapes suivantes :

- fournir une pluralité de retours d'informations d'utilisateur, où chaque retour d'informations d'utilisateur de la pluralité de retours d'informations d'utilisateur est associé à une identification de retour d'informations de la pluralité d'identifications de retour d'informations et décrit le confort thermique d'un utilisateur associé à l'identification de retour d'informations, où chaque retour d'informations d'utilisateur de la pluralité de retours d'informations d'utilisateur est fourni à un instant donné ;
- à chaque instant associé à un retour d'informations d'utilisateur de la pluralité de retours d'informations d'utilisateur, détecter une pluralité d'adresses de contrôle d'accès au support, MAC, chaque adresse MAC de la pluralité d'adresses MAC étant associée à un dispositif d'une pluralité de dispositifs présents dans un réseau local à courte portée associé au système HVAC ;
- corréler chaque adresse MAC de la pluralité d'adresses MAC avec une identification de retour d'informations de la pluralité d'identifications de retour d'informations à l'aide des instants associés à la pluralité de retours d'informations d'utilisateur en utilisant une métrique de corrélation.

6. Procédé (400) selon la revendication 5,
dans lequel la métrique de corrélation comprend une métrique de levier, une métrique de cooccurrence, une métrique d'élévation, une métrique de confiance et/ou une métrique de conviction.

7. Procédé (400) selon la revendication 5 ou la revendication 6,
dans lequel la corrélation de chaque adresse MAC de la pluralité d'adresses MAC avec une identification de retour d'informations de la pluralité d'identifications de retour d'informations à l'aide des instants associés à la pluralité de retours d'informations d'utilisateur en utilisant une métrique de corrélation comprend les étapes suivantes :

- pour chaque adresse MAC de la pluralité d'adresses MAC, détecter des informations relatives au fournisseur représentant un fournisseur du dispositif associé à l'adresse MAC respective et classer l'adresse MAC soit dans une première classe dans le cas où le fournisseur du dispositif est associé à un dispositif capable de créer une virtualisation d'une carte de réseau, soit dans une deuxième classe dans le cas contraire ;
- filtrer les adresses MAC classées dans la première classe de manière qu'à chaque instant, une seule adresse MAC soit sélectionnée pour chaque dispositif de la pluralité de dispositifs ;
- corréler chaque adresse MAC classée dans la deuxième classe et chaque adresse MAC sélectionnée dans la première classe avec une identification de retour d'informations de la pluralité d'identifications de retour d'informations à l'aide des instants associés à la pluralité de retours d'informations d'utilisateur en utilisant la métrique de corrélation.

8. Procédé (400) selon l'une quelconque des revendications 1 à 7,

dans lequel, pour chaque instant associé aux deux, ou davantage, retours d'informations de froid, déterminer une charge de refroidissement respective de chaque dispositif HVAC de la pluralité de dispositifs HVAC à l'aide des paramètres de fonctionnement détectés du dispositif HVAC respectif ;
pour chaque dispositif HVAC de la pluralité de dispositifs HVAC, déterminer une somme de charge de refroidissement en additionnant toutes les charges de refroidissement déterminées pour les instants associés aux deux retours d'informations de froid, ou davantage ; et
pour chaque dispositif HVAC de la pluralité de dispositifs HVAC, déterminer la valeur de poids respective comme une fraction de la somme de charge de refroidissement déterminée à partir d'une charge de refroidissement totale, la charge de refroidissement totale étant une somme de toutes les sommes de charge de refroidissement déterminées de la pluralité de dispositifs HVAC.

9. Système de chauffage, ventilation et climatisation, HVAC (100) comprenant :

• une pluralité de dispositifs d'utilisateur, où chacun de la pluralité de dispositifs d'utilisateur est configuré pour fournir des retours d'informations d'utilisateur ;
• une pluralité de dispositifs HVAC (102(1), 102(2), 102(3), 102(4), 102(5)), où chacun des dispositifs HVAC (102(1), 102(2), 102(3), 102(4), 102(5)) est associé à des paramètres de fonctionnement respectifs ; et
• un dispositif de commande (104) configuré pour commander la pluralité de dispositifs HVAC (102(1), 102(2),

102(3), 102(4), 102(5)), pour recevoir des retours d'informations d'utilisateur la part de la pluralité de dispositifs d'utilisateur, et pour mettre en œuvre le procédé selon l'une quelconque des revendications 1 à 8.

# Fig. 1

# Fig. 2A

# Fig. 2B

# Fig. 2C

# Fig. 3

## Fig. 4A

## Fig. 4B

Fig. 5A

500

108(u=1-U)

504

314

312

310

308(u=1-U)

302(n=1-N)

102(n=1-N)

502

Fig. 5B

# Fig. 6A

600

602

604

606

608

No 610

Yes

222

612

# Fig. 6B

650

652

654

No    Yes

660

No

656

Yes

658

662

664

# Fig. 6C

3

2

682

1

0

684

-1

686

-2

-3

# Fig. 7A

700A

u=1

704

706

708

710

712

No

Yes

u=u+1

716

**Fig. 7B**

# Fig. 7C

700C

u=1

704

204

718

u=u+1

712

No

Yes

234

222

720

# Fig. 8A

Fig. 8B

800B

850

852

854

858

860

862

864

# Fig. 9A

Fig. 9B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021026369 A1
- US 9429923 B2
- US 20210102724 A1